Europäisches Patentamt

European Patent Office

Office européen des brevets

(19)

(11) **EP 0 972 358 B1**

(12) **FASCICULE DE BREVET EUROPEEN**

(45) Date de publication et mention
de la délivrance du brevet:
**04.02.2004 Bulletin 2004/06**

(21) Numéro de dépôt: **98917222.6**

(22) Date de dépôt: **25.03.1998**

(51) Int Cl.$^7$: **H04B 5/00**, H01Q 7/00

(86) Numéro de dépôt international:
**PCT/FR1998/000593**

(87) Numéro de publication internationale:
**WO 1998/044652 (08.10.1998 Gazette 1998/40)**

(54) **INSTALLATION POUR L'AFFICHAGE ELECTRONIQUE D'INFORMATION**

EINRICHTUNG FÜR DIE ELEKTRONISCHE NACHRICHTENANZEIGE

INSTALLATION FOR ELECTRONIC DATA DISPLAY

(84) Etats contractants désignés:
**AT BE CH DE ES FR GB IT LI**

(30) Priorité: **28.03.1997 FR 9704033**

(43) Date de publication de la demande:
**19.01.2000 Bulletin 2000/03**

(73) Titulaire: **STORE ELECTRONIC SYSTEMS
ELECTRONIC SHELF LABEL
95870 Bezons (FR)**

(72) Inventeur: **Almero, Jean-Jacques
31400 Toulouse (FR)**

(74) Mandataire: **Corret, Hélène et al
Cabinet Régimbeau
20, rue de Chazelles
75847 Paris Cedex 17 (FR)**

(56) Documents cités:
**EP-A- 0 414 628          EP-A- 0 447 278
WO-A-91/08539**

• **W.C.JAKES: "A Comparison of Specific Space
Diversity Techniques for Reduction of Fast
Fading in UHF Mobile Radio Systems" IEEE
TRANSACTIONS ON VEHICULAR
TECHNOLOGY, vol. 20, no. 4, novembre 1971,
pages 81-92, XP002052299**

## Description

L'invention concerne une installation pour l'affichage électronique d'informations telles que des prix le long de gondoles de réception de produits dans un local tel qu'un magasin de vente au détail (affichage des prix), un entrepôt (affichage de références)....

FR-2 658 645 décrit une installation à transmission unidirectionnelle comprenant des moyens d'émission, à antenne d'émission en boucle de courant s'étendant dans le local, de signaux sinusoïdaux à basse fréquence (c'est-à-dire à une fréquence comprise entre 10 kHz et 150 kHz) modulés selon des données a transmettre a des modules d'affichage électronique des informations. Chaque module d'affichage comprend un récepteur à antenne de réception cadre adaptée pour capter principalement la composante magnétique des ondes émises (couplage magnétique). L'antenne d'émission est une boucle de courant qui peut être réalisée soit sous forme d'une boucle unique, soit sous la forme d'un ensemble de boucles, de manière à couvrir toute l'étendue du local.

Néanmoins, même lorsqu'on utilise une antenne d'émission formant plusieurs boucles, on constate. qu'il existe toujours des zones dans le local où les modules d'affichage ne reçoivent pas les signaux.

En outre, on ne sait pas prévoir à l'avance précisément la localisation de ces zones d'ombre, qui peuvent être soit des zones d'ombre de polarisation dues à une disposition et une orientation défavorables des modules d'affichage par rapport à l'antenne d'émission, soit des zones d'ombre d'évanouissement local du champ dues à une dispersion des ondes par des éléments métalliques.

En conséquence, il est extrêmement difficile dans la pratique de prévoir, lors de la pose de l'antenne d'émission, la localisation des zones d'ombre. Or, la pose d'une telle antenne d'émission en plafond ou dans le sol est une opération lourde et coûteuse, en

général concomitante au gros oeuvre. Ainsi, il est difficile, sinon impossible, de déplacer ultérieurement l'antenne d'émission si l'on constate la présence de zones d'ombre à des endroits supposés recevoir des modules d'affichage.

Dès lors, après avoir équipé le local de son antenne d'émission et de son mobilier (gondoles), il est nécessaire de déterminer, par des essais dans le local, l'emplacement des zones d'ombre dans lesquelles on ne peut pas placer de modules d'affichage. On évite ainsi les mauvaises réceptions ultérieures, mais on doit renoncer à placer des modules d'affichage électronique à certains endroits du local.

Pour remédier à ces problèmes, on a envisagé des installations à transmission bidirectionnelle, c'est-à-dire dans lesquelles les modules d'affichage émettent des signaux d'acquittement lorsqu'ils ont bien reçus les signaux. Ces installations sont néanmoins coûteuses et beaucoup plus complexes. En effet, les modules d'affichage, qui sont utilisés en très grand nombre (un magasin comprend classiquement jusqu'à 15 000 références de produits), sont complexes et coûteux (de l'ordre de 75 à 100 F) . En outre, ils sont volumineux et peu esthétiques, et la durée nécessaire à chaque transmission est beaucoup trop longue.

Par ailleurs, il est à noter que la transmission de signaux par ondes électromagnétiques basse ou moyenne fréquence se fait à courte distance (moins de 10 m), avec une puissance élevée à l'émission, et avec des récepteurs fixes.

Au contraire, avec toutes les techniques connues utilisées en haute fréquence et/ou avec des récepteurs mobiles, dont la direction de polarisation est aléatoire, les problèmes qui se posent sont plutôt des problèmes d'interférences. En outre, de tels récepteurs mobiles (téléphones portatifs...) sont complexes et coûteux et sont en général à transmission bidirectionnelle. Avec ces récepteurs, le problème des zones d'ombre de polarisation ne se pose guère car il suffit, en cas de mauvaise réception, d'orienter le récepteur différemment. Pour éviter à l'avance les possibilités de mauvaises orientations de récepteurs mobiles, on peut utiliser plusieurs antennes émettrices orientées selon différentes directions de l'espace. Néanmoins, cette solution n'est pas envisageable pour résoudre les problèmes posés par l'affichage électronique d'informations dans un local car elle supposerait une puissance trop considérable à l'émission (les antennes d'émission étant alors fortement éloignées, parfois de plus de 50 m, des récepteurs les plus lointains).

En conséquence, les solutions utilisées dans le domaine des hautes fréquences et/ou avec des récepteurs mobiles ne sont. pas transposables au domaine technique de l'invention où les problèmes qui se posent sont différents et spécifiques.

L'invention vise à pallier les inconvénients suscités des installations à transmission unidirectionnelle en proposant une installation exempte de zone d'ombre, les modules d'affichage pouvant être placés à tout endroit du local.

L'invention vise aussi à proposer une telle installation qui soit de surcroît fiable, simple et peu onéreuse, notamment avec des modules d'affichage électronique simples, fiables, peu coûteux et peu volumineux, et avec des moyens d'émission dont la puissance, et donc le coût, sont compatibles avec une utilisation dans un local tel qu'un magasin de vente au détail. A ce titre, il est à noter que l'installation selon l'invention doit rester d'un coût à l'utilisation très faible pour ne pas grever le prix de revient des produits vendus.

Dans toute la présente demande, l'expression "antenne en boucle de courant" désigne toute antenne formée d'un conducteur électrique filiforme s'étendant selon au moins une boucle ou une spire, de façon à présenter une impédance essentiellement inductive. Cette expression englobe donc les antennes dites antennes cadre, les solénoïdes avec ou sans noyau de ferrite,....

Par ailleurs, l'expression "brin" d'antenne désigne toute portion au moins sensiblement rectiligne ou de même courbure curviligne d'un conducteur d'antenne. Ainsi, les différents brins d'une même antenne sont séparés par des discontinuités de courbure.

Au sens de la présente demande, le domaine des basses et moyennes fréquences s'étend entre 10 kHz et 1500 kHz.

L'invention concerne donc une installation pour l'affichage électronique d'informations le long de gondoles de réception de produits dans un local tel qu'un magasin de vente au détail, comprenant :

- des moyens d'émission, à antenne d'émission en boucle de courant, de trains de signaux sinusoïdaux, sous forme d'ondes électromagnétiques modulées à basse ou moyenne fréquence selon des données à transmettre à des modules d'affichage,
- des modules d'affichage électronique d'informations comprenant chacun un récepteur à antenne de réception polarisée selon une direction de polarisation et adaptée pour capter principalement la composante magnétique des ondes émises,

caractérisée en ce que les moyens d'émission comportent en combinaison :

. une pluralité d'antennes d'émission en boucle de courant formant au moins des brins s'étendant horizontalement, et disposés par rapport au local de façon que dans au moins une portion de l'espace dans lequel des modules d'affichage sont susceptibles d'être installés, toute zone, dite zone d'aplomb, qui est comprise dans une zone de portée d'un brin, dit premier brin, d'une première antenne d'émission, mais qui est située au moins sensiblement à l'aplomb du premier brin selon la direction de polarisation des antennes de réception desdits modules d'affichage, est couverte par une zone de portée d'au moins un deuxième brin appartenant à une deuxième antenne d'émission distincte de la première antenne d'émission,
. des moyens de commutation automatique adaptés pour appliquer sur les différentes antennes d'émission, l'une après l'autre, chacun des trains de signaux qui est donc émis et répété successivement par les différentes antennes d'émission, de sorte que tout module d'affichage dans la zone d'aplomb du premier brin reçoit les ondes émises et que le local est exempt de zone d'ombre.

Au sens de la présente demande, l'expression "zone de portée" d'un brin d'antenne d'émission désigne toute zone dans le local dans laquelle la puissance des ondes émises est suffisante pour permettre la réception des données à transmettre par un module d'affichage.

L'expression "zone à l'aplomb d'un brin d'antenne selon la direction de polarisation des antennes de réception" désigne la zone d'espace définie par tous les plans (ou les cylindres si le brin d'antenne est courbe) contenant chacun le brin d'antenne et une droite parallèle ou confondue à l'une des directions possibles pour la polarisation des antennes de réception ; en général, la direction de polarisation est verticale ou peu inclinée par rapport à la verticale, de sorte que ladite zone est globalement à la verticale du brin d'antenne, mais toute autre disposition est possible et englobée dans cette expression.

Grâce à l'invention, on évite en particulier toute zone d'ombre dans la portion susmentionnée de l'espace dans lequel des modules d'affichage sont susceptibles d'être installés.

Avantageusement et selon l'invention, on dispose les antennes d'émission par rapport au local de telle sorte que pour la majorité de l'espace dans lequel des modules d'affichage sont susceptibles d'être installés, - et de préférence pour tout cet espace-, toute zone d'aplomb d'un premier brin d'une première antenne d'émission est couverte par une zone de portée d'au moins un deuxième brin d'une deuxième antenne d'émission distincte, de sorte qu'on évite toute zone d'ombre dans la majorité -notamment dans la totalité- de cet espace.

Avantageusement et selon l'invention, au moins une portion de la zone d'aplomb d'un premier brin d'une première antenne d'émission n'est pas coupée par une zone d'aplomb d'un deuxième brin d'une deuxième antenne d'émission distincte de la première antenne d'émission. Il reste possible d'admettre, dans certaines applications, qu'en certaines portions très localisées et définies dudit espace dans lequel les modules d'affichage sont susceptibles d'être installés, des zones d'ombres apparaissent. Ainsi, avantageusement et selon l'invention, pour chacun des brins, ladite portion de la zone d'aplomb comprend toute la zone à l'aplomb du premier brin selon la direction de polarisation des antennes de réception, à l'exception, s'il en existe, des zones à l'aplomb de l'intersection du premier et du deuxième brin, selon la direction de polarisation des antennes de réception.

De préférence et selon l'invention, les antennes d'émission sont disposées par rapport au local, de façon que lesdites zones d'aplomb dans ledit espace dans lequel les modules d'affichage sont susceptibles d'être installés, sont disjointes.

Par ailleurs, de préférence et selon l'invention, tout point de l'espace dans lequel les modules d'affichage sont susceptibles d'être installés, est couvert par une zone de portée d'au moins un brin d'antenne d'émission, c'est-à-dire est à la portée d'au moins une antenne d'émission.

Avantageusement et selon l'invention, les antennes d'émission sont disposées, compte tenu de la puissance d'émission des moyens d'émission, de telle sorte que dans l'espace couvrant toute la surface utile du sol du local et s'étendant sur une hauteur supérieure ou égale à celle des gondoles, tout point est couvert par les zones de portée d'au moins deux brins distincts dont l'un appartient à une première antenne d'émission, tandis que l'autre appartient à une deuxième antenne d'émission distincte de la première antenne d'émission.

Avantageusement et selon l'invention, toutes les antennes d'émission ont au moins sensiblement la même forme générale, notamment polygonale, chaque brin étant constitué d'un côté d'une antenne d'émission. Avantageusement et selon l'invention, l'installation comprend au moins un groupe des brins des différentes antennes d'émission qui s'étendent au moins sensiblement horizontalement et parallèlement les uns aux autres. Les antennes d'émission peuvent aussi comprendre des brins non horizontaux. Néanmoins, de préférence, avantageusement et selon l'invention, chaque antenne d'émission s'étend globalement dans un plan horizontal, et toutes les antennes d'émission s'étendent globalement dans un même plan horizontal. Avantageusement et selon l'invention, on dispose toutes les antennes d'émission sous un plancher et/ou dans un plafond du local.

Selon l'invention, les antennes d'émission sont disposées de façon concentrique les unes par rapport aux autres, ou décalées latéralement les unes des autres.

Avantageusement et selon l'invention, l'installation comprend deux antennes d'émission placées dans un même plan horizontal, de formes semblables adaptées pour couvrir toute la surface du local, la distance d séparant les brins des deux antennes étant en tous points inférieure à $\sqrt{(R^2 - h^2)}$ où R est le rayon de portée des antennes, et h est la hauteur séparant le plan horizontal contenant les brins des antennes du plan horizontal le plus éloigné susceptible de contenir un module d'affichage.

Avantageusement et selon l'invention, les moyens de commutation automatique sont adaptés pour appliquer successivement chacun des trains de signaux sur les différentes antennes d'émission selon une permutation.

Avantageusement et selon l'invention, les modules d'affichage sont exempts de moyens d'émission, la transmission des signaux étant unidirectionnelle des antennes d'émission vers les modules d'affichage.

Avantageusement et selon l'invention, les moyens de commutation automatique comprennent un démultiplexeur interposé entre une sortie d'un circuit amplificateur d'alimentation en trains de signaux et les différentes antennes, et adapté pour relier cette sortie à une et une seule antenne d'émission, et pour commuter, sur cette sortie, les différentes antennes d'émission successivement sous la commande d'un circuit à microprocesseur relié au démultiplexeur pour lui fournir un signal de commande.

Avantageusement et selon l'invention, l'installation comporte un ordinateur de contrôle relié aux moyens d'émission et programmé pour leur délivrer des séries de données numériques à transmettre aux modules d'affichage, et pour répéter chaque série de données successivement, conformément au nombre d'antennes d'émission. Cet ordinateur est avantageusement un micro-ordinateur délivrant les signaux à émettre par une liaison série. Avantageusement et selon l'invention, le micro-ordinateur est programmé pour commander la commutation des antennes d'émission. En variante et selon l'invention, ledit circuit à microprocesseur est adapté et programmé pour commander la commutation des antennes d'émission lorsque le signal est nul pendant une durée prédéterminée.

Avantageusement et selon l'invention, les moyens de commutation automatique comportent des moyens d'adaptation d'impédance pour chaque antenne d'émission comprenant des moyens de sélection automatique adaptés pour associer, lors de la connexion de chaque antenne d'émission à la sortie d'un circuit amplificateur d'alimentation en trains de signaux, une impédance de valeur appropriée adaptée à l'antenne d'émission connectée.

Ainsi, de façon surprenante, l'invention permet avec des brins d'antennes horizontaux et en général parallèles les uns aux autres, avec des zones de portée qui se chevauchent, et par une simple répétition des signaux successivement sur les différentes antennes, d'éviter toute zone d'ombre.

En effet, on constate que grâce à l'invention, une zone d'ombre de polarisation d'un brin d'une première antenne est couverte par la zone de portée d'au moins un autre brin d'une deuxième antenne d'émission et n'est pas une zone d'ombre pour cet autre brin. La réception des modules d'affichage disposés dans cette zone d'ombre pourra ainsi se faire lorsque ladite deuxième antenne d'émission sera active.

Par ailleurs, on constate aussi que grâce à l'invention, si une zone d'ombre se produit en un point par évanouissement local du champ produit par un brin, le champ produit par un autre brin adjacent en ce point ne subira pas ce phénomène qui est étroitement lié à la position du brin d'antenne d'émission par rapport aux autres éléments métalliques du local.

En outre, il est à noter que l'invention permet d'obtenir ces résultats même lorsque les modules d'affichage sont passifs (c'est-à-dire uniquement récepteurs), peu coûteux à la fabrication et à l'usage (pouvant être proposés à un prix inférieur à 50 F), et avec des moyens d'émission également simples et peu coûteux.

L'invention concerne aussi une installation caractérisée en ce qu'elle comprend en combinaison tout ou partie des caractéristiques mentionnées ci-dessus ou ci-après.

D'autres buts, caractéristiques et avantages de l'invention apparaîtront à la lecture de la description suivante en référence aux figures annexées dans lesquelles :

- la figure 1 est un schéma général d'une installation selon l'invention,

- les figures 2 et 3 sont des schémas en vue de dessus illustrant respectivement deux exemples de disposition de deux antennes dans une installation selon l'invention,
- les figures 4 et 5 sont des schémas en coupe verticale illustrant respectivement deux exemples de disposition des antennes d'une installation selon l'invention,
- la figure 6 est un schéma d'un circuit amplificateur d'alimentation en trains de signaux des moyens d'émission d'une installation selon l'invention,
- la figure 7 est un exemple d'organigramme de fonctionnement d'une installation selon l'invention tel qu'exécuté par un ordinateur de contrôle,
- la figure 8 est un schéma illustrant un exemple de format de données numériques à transmettre à un module d'affichage d'une installation selon l'invention,
- la figure 9 est un schéma illustrant le séquencement des émissions par les différentes antennes d'émission d'une installation selon l'invention,
- la figure 10 est un schéma d'un mode de réalisation d'un circuit démultiplexeur d'une installation selon l'invention.

Une installation selon l'invention comprend des moyens 1 d'émission de trains de signaux sinusoïdaux sous forme d'ondes électromagnétiques modulées à basse ou moyenne fréquence (c'est-à-dire à une fréquence classiquement comprise entre 10 kHz et 1500 KHz) selon des données à transmettre à des modules d'affichage 2. L'installation comprend donc également une pluralité de modules d'affichage 2 électronique d'informations répartis dans un local 6 de façon à pouvoir recevoir les ondes émises par les moyens d'émission, et donc les trains de signaux correspondant aux données transmises. Le local 6 comprend un espace 8 dans lequel les modules d'affichage sont susceptibles d'être installés.

Les modules d'affichage électronique 2 d'une installation selon l'invention sont connus en eux-mêmes et peuvent être de type traditionnel. Ils ne seront donc pas décrits en détail. Ces modules sont constitués de boîtiers d'affichage, parfois désignés "Etiquettes Electroniques de Gondoles" ou EEG, et comprennent (cf. par exemple FR-2 658 645 ou les modules d'affichage commercialisés par la Société SITOUR ELECTRONIC SYSTEMS SES (France)) un récepteur à antenne de réception cadre, polarisée selon une direction de polarisation 3 en général non horizontale, et de préférence verticale ou proche de la verticale, et adaptée pour capter principalement la composante magnétique des ondes émises. Les modules d'affichage 2 comprennent également un circuit électronique de démodulation, un circuit à microprocesseur, une mémoire de stockage d'adresse et de stockage de données reçues, un écran d'affichage, et des moyens d'alimentation en énergie électrique (pile ou accumulateur), l'ensemble étant conçu pour présenter une faible consommation électrique, un faible coût, et des performances adaptées aux caractéristiques des ondes électromagnétiques modulées à recevoir. De préférence, les modules d'affichage 2 sont de type passifs, c'est-à-dire n'émettent pas de signal d'acquittement de bonne réception des trains de signaux vers les antennes d'émission. Ainsi, ils peuvent être exempts de moyens d'émission.

Généralement, la direction de polarisation 3 de l'antenne cadre de chaque module d'affichage 2 électronique est verticale, ou au moins sensiblement verticale. Il est à noter, à cet égard, que cette direction de polarisation 3 est fixe une fois que les modules d'affichage 2 sont installés sur les gondoles et lorsque l'on souhaite transmettre des informations vers ces modules d'affichage 2. En outre, également en général et bien que l'invention soit également applicable si ce n'était pas le cas, la direction de polarisation 3 est au moins sensiblement la même pour tous les modules d'affichage 2 d'un même local 6.

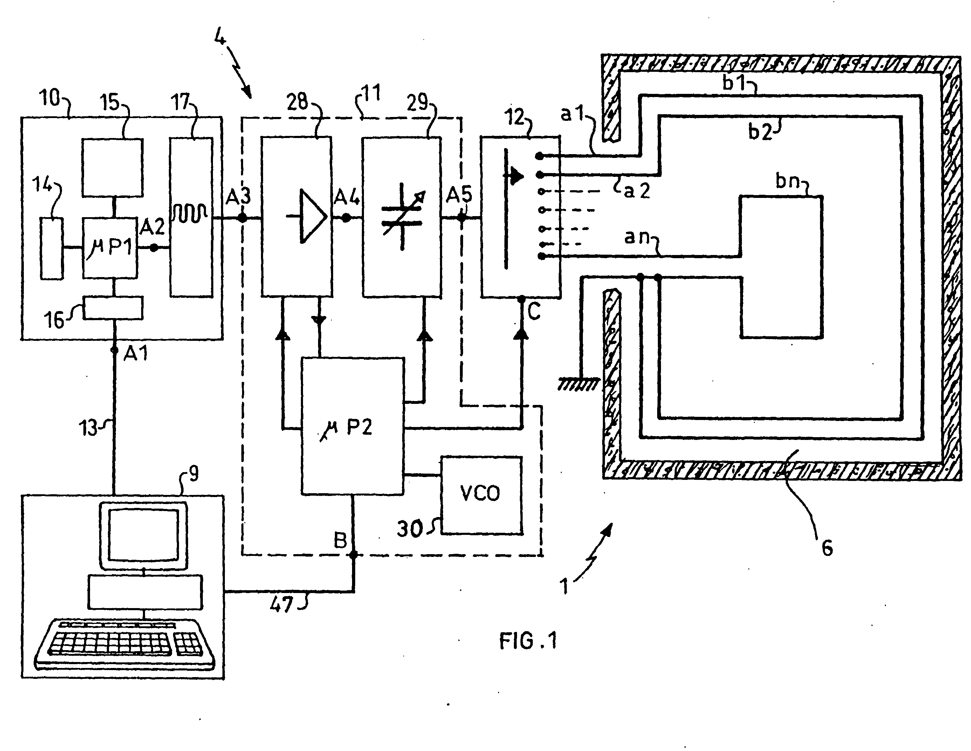

La figure 1 représente essentiellement les moyens 1 d'émission d'une installation selon l'invention. Ces moyens 1 d'émission sont formés d'une part d'une pluralité d'antennes a1, ..., ai, ..., an d'émission en boucle de courant formant au moins des brins b1, ..., bi, ..., bn s'étendant horizontalement dans le local 6 (les antennes d'émission ai pouvant présenter d'autres brins non horizontaux), et d'un ensemble 4 électronique et/ou informatique permettant de mettre en forme les trains de signaux sinusoïdaux, qui sont des signaux de courant électrique, appliqués aux différentes antennes d'émission ai.

Selon l'invention, cet ensemble 4 électronique et/ou informatique comprend des moyens 11, 12 de commutation automatique adaptés pour appliquer sur les différentes antennes ai d'émission, l'une après l'autre, chacun des trains de signaux qui est donc émis et répété successivement sur les différentes antennes d'émission ai.

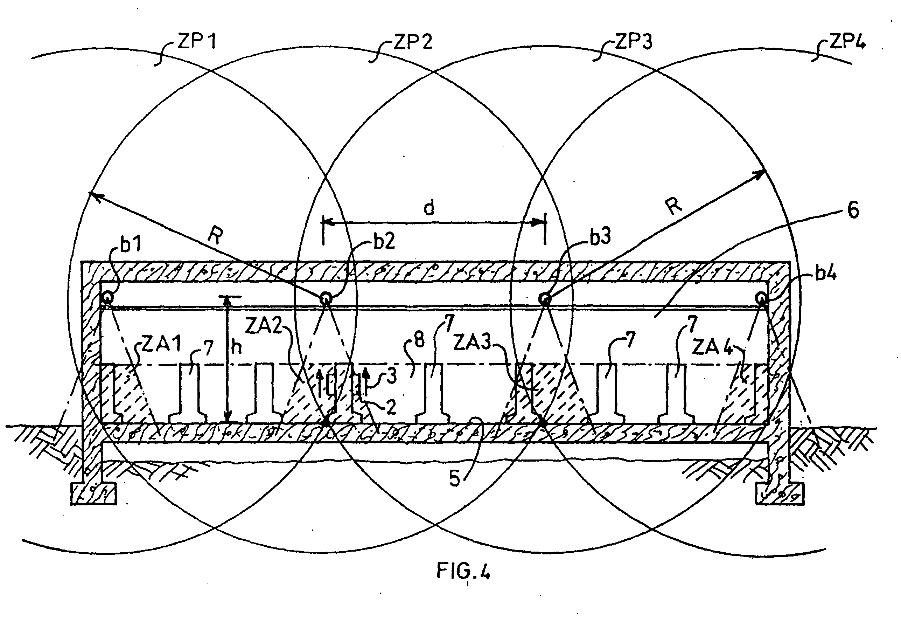

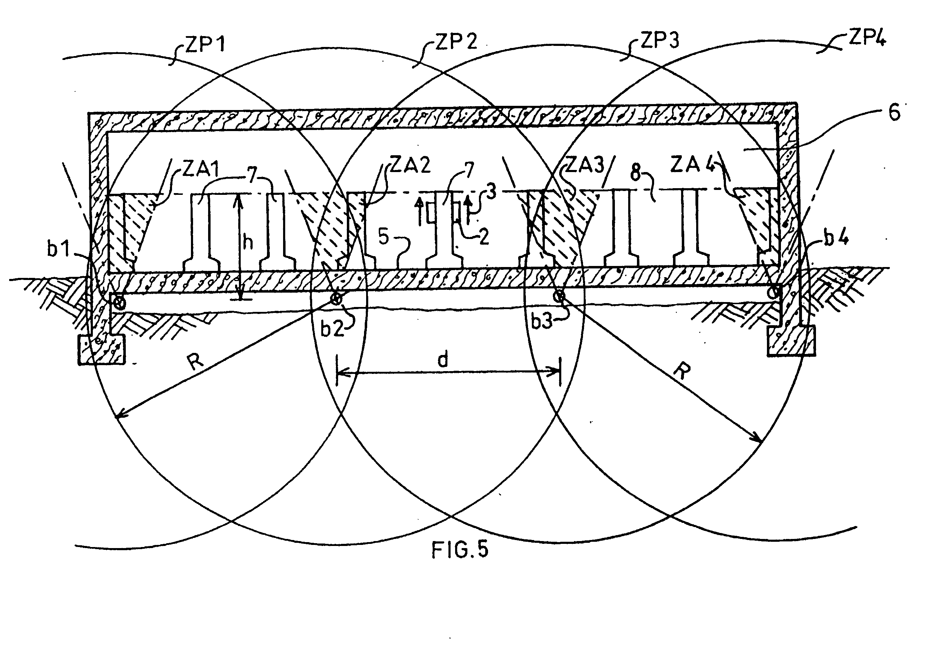

Les antennes d'émission ai sont disposées de telle sorte que la zone de portée des différents brins bi horizontaux couvre l'ensemble de la surface utile du sol 5 du local 6, et tout l'espace 8 dans lequel les modules d'affichage 2 sont susceptibles d'être installés. Les antennes d'émission ai peuvent être placées avec les brins horizontaux bi qui s'étendent sous le plancher (mode de réalisation de la figure 5), et/ou en plafond (mode de réalisation de la figure 4) et/ou le long de parois verticales (variante non représentée).

Quoiqu'il en soit, avec les brins bi horizontaux et la direction de polarisation 3, on peut définir, pour chaque brin bi, une zone, dite zone d'aplomb $ZA_i$, dans laquelle des modules d'affichage 2 sont susceptibles d'être installés, qui est donc comprise dans l'espace 8 et dans une zone de portée $ZP_i$ du brin bi de l'antenne d'émission ai, mais qui est située au moins sensiblement à l'aplomb du brin bi selon la direction de polarisation 3 des antennes de réception des modules d'affichage 2. Compte tenu des variations d'orientation pouvant être autorisées pour la direction de polarisation 3 des modules d'affichage 2, la zone d'aplomb ZAi est en pratique formée de l'intersection dans l'espace d'un secteur d'espace angulaire ayant pour sommet le brin bi et un angle d'ouverture correspondant aux variations angulaires possibles de la direction de polarisation 3, et de l'espace 8 du local 6 dans lequel les modules d'affichage 2 sont susceptibles d'être installés, qui est généralement compris entre le sol 5 et la plus grande hauteur admissible pour les gondoles 7 recevant les produits. Comme expliqué ci-dessus, le terme "aplomb" ne doit pas être considéré, au sens de la présente demande, comme limité à la direction verticale, mais englobe au contraire toutes les orientations possibles pouvant être données à la direction de polarisation 3 qui n'est pas nécessairement verticale, et qui, seule, définit la notion d'aplomb. Ainsi, au sens de la présente demande, la zone d'aplomb ZAi peut être située au-dessus du brin bi (figure 5), voire même décalée horizontalement par rapport à la verticale au brin bi.

Par ailleurs, chaque brin bi définit une zone de portée ZPi dans laquelle la puissance des ondes émises est suffisante pour permettre la réception par un module d'affichage 2 des trains de signaux sinusoïdaux. Cette zone de portée ZPi est formée d'un cylindre de révolution autour du brin bi lorsque celui-ci est rectiligne.

Selon l'invention, pour chacun de ces brins, et dans au moins une portion -notamment dans la majorité et de préférence dans la totalité- de l'espace 8 dans lequel des modules d'affichage sont susceptibles d'être installés, toute zone d'aplomb ZAi d'un premier brin bi d'une première antenne d'émission ai, est couverte par une zone de portée ZPj d'au moins un deuxième brin bj appartenant à une deuxième antenne d'émission aj, distincte de la première antenne d'émission ai. En outre, de préférence et selon l'invention, la zone d'aplomb ZAj du deuxième brin bj ne coupe pas la zone d'aplomb ZAi du premier brin bi. De préférence et selon l'invention, les différentes zones d'aplomb ZA1, ..., ZAi, ..., ZAn, formées respectivement par les différents brins b1, ..., bi, ..., bn, sont distinctes les unes des autres, ne se coupent pas, et sont éloignées les unes des autres. Autrement dit, le deuxième brin bj ne coupe pas les droites qui prolongent la direction de polarisation 3 des antennes de réception des modules d'affichage 2 qui sont susceptibles d'être disposés dans la zone d'aplomb ZAi du premier brin bi. Plus généralement, chaque brin horizontal d'une antenne d'émission est disposé de façon à ne pas couper les droites prolongeant la direction de polarisation 3 des antennes de réception des modules d'affichage 2 susceptibles d'être installés dans les zones d'aplomb de tous les autres brins. Par contre, chacune des zones d'aplomb ZAi d'un brin bi d'une première antenne d'émission est couverte au moins par une zone de portée ZPj d'au moins un autre brin bj d'une deuxième antenne d'émission distincte.

Par ailleurs, de préférence et selon l'invention, les antennes d'émission ai sont disposées, compte tenu de la puissance d'émission des moyens d'émission, de telle sorte que dans l'espace 8 couvrant toute la surface utile du sol 5 et du local 6, et sur une hauteur supérieure ou égale à celles des gondoles 7, c'est-à-dire dans l'espace 8 utile dans lequel des modules d'affichage 2 sont susceptibles d'être installés, tout point appartient aux zones de portée ZPi, ZPj, d'au moins deux brins bi, bj distincts, appartenant l'un à une première antenne d'émission ai, et l'autre à une deuxième antenne d'émission distincte aj. Autrement dit, les zones de portée ZPi, ZPj des brins horizontaux bi, bj des différentes antennes d'émission se chevauchent.

Les figures 4 et 5 représentent deux exemples de réalisation avec quatre brins horizontaux b1, b2, b3, b4 définissant respectivement quatre zones d'aplomb ZA1, ZA2, ZA3, ZA4, et quatre zones de portée ZP1, ZP2, ZP3, ZP4. Comme on le voit, chaque zone d'aplomb d'un brin est couverte par au moins une zone de portée d'un autre brin, et plus particulièrement par deux zones de portée de deux autres brins appartenant à au moins une antenne distincte. Par exemple, la zone d'aplomb ZA2 du brin b2 est couverte par la zone de portée ZP3 du brin b3, et par la zone de portée ZP1 du brin b1. En outre, les zones de portée des brins adjacents se chevauchent, chaque point de l'espace utile 8 étant couvert par au moins deux zones de portée distinctes.

Par ailleurs, selon l'invention, deux brins adjacents appartiennent à deux antennes d'émission distinctes. En pratique, pour réaliser cette condition, il suffit de prévoir deux antennes d'émission distinctes dont la première forme les brins b1 et b3, et dont la seconde forme les brins b2 et b4. On peut aussi prévoir quatre antennes d'émission distinctes formant respectivement chacun des brins b1, b2, b3, b4.

A cet égard, les figures 1 à 3 représentent des exemples de disposition des différents brins horizontaux des antennes d'émission. Dans la variante représentée figure 1, les antennes d'émission sont disposées de façon concentrique, l'antenne an étant la plus près du centre du local, tandis que l'antenne a1 est la plus proche de la périphérie du local 6.

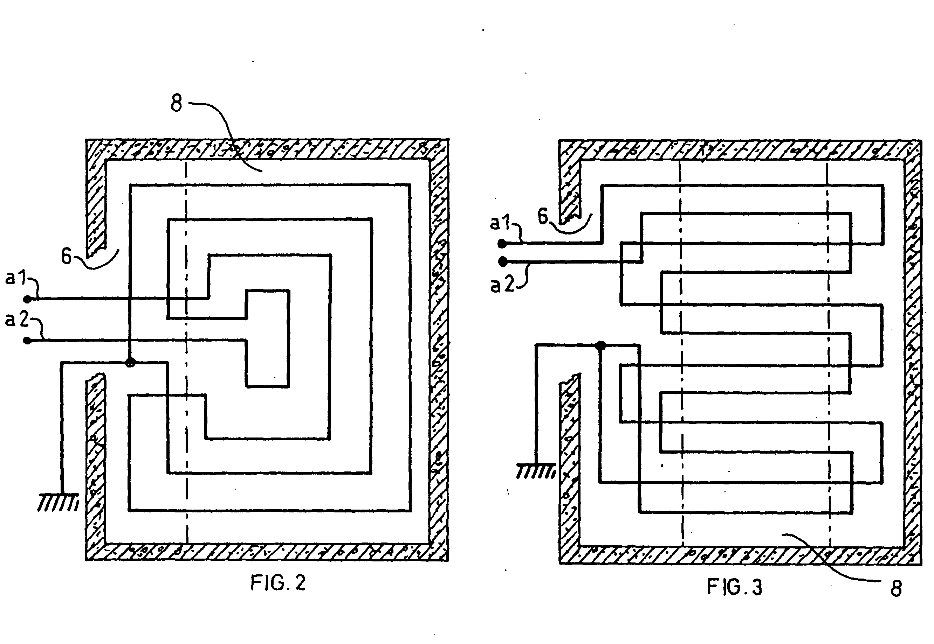

Dans la variante de la figure 2, deux antennes d'émission a1, a2 sont également disposées de façon globalement concentriques, mais chaque antenne d'émission forme elle-même plusieurs boucles, à savoir deux boucles successives dans l'exemple représenté figure 2.

Dans la variante de la figure 3, deux antennes d'émission a1, a2 sont disposées décalées latéralement l'une de l'autre, c'est-à-dire avec les brins de l'antenne a1 décalés latéralement de ceux de l'antenne a2.

Avec cette variante, on limite de préférence l'espace 8 dans lequel les gondoles sont placées, comme représenté figure 3, à l'espace dans lequel les zones d'aplomb des brins d'antenne ne se recoupent pas.

Néanmoins, il est à noter qu'on peut placer des modules d'affichage 2 dans tout le local 6, à l'exception des zones (de petites dimensions) à l'aplomb de l'intersection des brins des antennes a1 et a2, selon la direction de polarisation des antennes de réception. Ainsi, il est admissible au sens de la présente invention que les brins d'antenne se coupent, selon la direction de polarisation 3 des antennes de réception, et donc que leurs zones d'aplomb se coupent en des zones d'intersection de faibles dimensions. Mais la variante de la figure 2 est préférentielle, en ce sens que le nombre de ces intersections est beaucoup plus faible, l'espace 8 sans intersection et sans zone d'ombre étant plus grand (à longueur d'antenne constante).

Sur les figures 2 et 3, les échelles horizontales ne sont pas réalistes et sont exagérées pour plus de clarté.

De préférence, les antennes d'émission ont, comme dans les variantes représentées, au moins sensiblement la même forme générale polygonale, les brins des différentes antennes d'émission s'étendant au moins sensiblement parallèlement les uns aux autres, toutes les antennes d'émission s'étendant globalement dans un même plan horizontal.

Le nombre n d'antennes d'émission est au moins égal à 2. Avantageusement et selon l'invention, l'installation comprend deux antennes d'émission a1, a2 placées dans un même plan horizontal, de formes semblables adaptées pour couvrir toute la surface du local 6, la distance d séparant les brins des deux antennes a1, a2 étant en tous points inférieure à $\sqrt{(R^2 - h^2)}$ où R est le rayon de portée des antennes a1, a2 et h est la hauteur séparant les brins des antennes a1, a2 du plan horizontal le plus éloigné susceptible de contenir un module d'affichage 2. De la sorte, les zones de portée des deux antennes d'émission se chevauchent.

Pour une puissance d'émission de l'ordre de 120 W, la distance entre deux brins adjacents est par exemple comprise entre 3 m et 5 m -notamment de l'ordre de 4 m-.

Chacun des trains de signaux étant émis et répété par les différentes antennes d'émission successivement, l'une après l'autre, avec la disposition d'antennes d'émission décrite ci-dessus, chaque module d'affichage 2 recevra le train de signaux, soit à partir de l'une des antennes d'émission, soit à partir d'une autre antenne d'émission, soit à partir de toutes les antennes d'émission, selon que ce module d'affichage 2 se trouve ou non dans une zone d'ombre pour l'une ou l'autre de ces antennes d'émission. Néanmoins, compte tenu de la disposition des différentes antennes et des différents brins mentionnés ci-dessus, il n'est pas possible qu'un même module d'affichage 2 appartienne simultanément aux zones d'ombre de polarisation de tous les brins d'antenne à la portée desquels ils se trouvent. De même, si un module d'affichage 2 est dans une zone d'évanouissement du champ local vis-à-vis d'un premier brin d'antenne, il n'est pas possible qu'il soit également dans une zone d'évanouissement local pour un autre brin adjacent à la portée duquel il se trouve. Ainsi, grâce à l'invention, on évite de façon certaine toute zone d'ombre dans l'espace 8 utile du local 6 dans lequel des modules d'affichage 2 sont susceptibles d'être installés.

Dès lors, grâce à l'invention, il est possible de disposer les modules d'affichages 2 à tout endroit quelconque de cet espace 8 compris entre le sol 5 et la hauteur maximum des gondoles 7, et il est possible de modifier l'emplacement des modules d'affichage 2 à tout moment sans risque de problème à la réception.

L'ensemble 4 électronique et/ou informatique met en forme et délivre les trains de signaux pour les différentes antennes d'émission. Il est à noter que cet ensemble 4 électronique et/ou informatique est exempt de tous moyens de réception de signaux dans la mesure où les modules d'affichage 2 eux-mêmes sont exempts de moyens d'émission, la transmission des signaux étant unidirectionnelle depuis les antennes d'émission vers les modules d'affichage 2.

Dans le mode de réalisation représenté sur les figures, l'ensemble 4 électronique et/ou informatique comprend un micro-ordinateur 9 de contrôle, un circuit 10 modulateur, un circuit 11 amplificateur d'alimentation, et un démultiplexeur 12.

Le micro-ordinateur 9 est relié par une liaison série 13 au circuit modulateur 10 pour lui transmettre les données numériques à destination des modules d'affichage 2. Le micro-ordinateur 9 émet également sur cette liaison 13 des signaux de commande pour le circuit modulateur 10. Ce circuit modulateur 10 comprend un microprocesseur μP1 avec sa mémoire morte EPROM 14 et des mémoires volatiles 15 qui lui sont associées. Le microprocesseur μP1 reçoit les signaux en provenance de la liaison série 13 par l'intermédiaire d'un registre à décalage 16 (UART) relié à la liaison série 13 en un point A1. Le microprocesseur μP1 est relié à un circuit électronique oscillateur 17 en un point A2, de telle sorte que ce circuit oscillateur 17 peut former des signaux sinusoïdaux à basse ou moyenne fréquence modulés selon les données numériques qu'il reçoit du microprocesseur μP1. Ce circuit oscillateur 17 permet de former des signaux sinusoïdaux de préférence modulés en fréquence (modulation dite FSK), mais toute autre forme de modulation est possible (modulation de fréquence et/ou modulation d'amplitude et/ou modulation de phase).

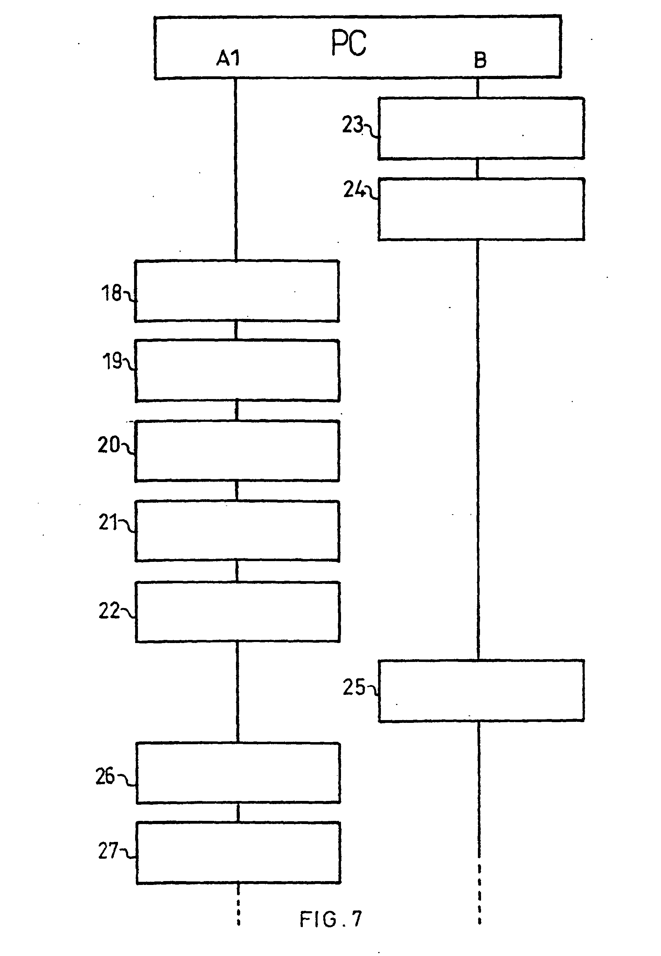

Une séquence type de signaux délivrés par le micro-ordinateur 9 au microprocesseur μP1 du circuit modulateur 10 apparaît de la figure 7. Dans une première étape 18, le micro-ordinateur 9 émet un signal de commande indiquant au microprocesseur μP1 que des données à transmettre vont lui être adressées, de sorte que ce microprocesseur μP1 peut procéder au chargement des données dans sa mémoire volatile 15. Dans une deuxième étape 19, le micro-ordinateur 9 émet lesdites données sur la liaison série 13. Ce faisant, le microprocesseur μP1 reçoit ces données, les identifie, et les charge dans sa mémoire volatile 15. A la fin de la série de données à émettre, le micro-ordinateur 9 envoie, lors de l'étape 20, sur la liaison série 13, une commande de fin de chargement, puis lors de l'étape 21 une commande d'émission à partir de laquelle le microprocesseur µP1 va fournir au circuit oscillateur 17 les données numériques qu'il a chargées dans sa mémoire volatile 15. Lors de l'étape 22, le micro-ordinateur 9 attend la fin de l'émission des données. En effet, le micro-ordinateur 9 est programmé pour connaître à l'avance la durée moyenne de l'émission des données qu'il a transmises au circuit modulateur 10.

Classiquement, les données à transmettre sont formées d'une série de données destinées aux divers modules d'affichage 2 du local 6. Une telle série de données est appelée un télégramme. Chaque télégramme comprend donc une pluralité de messages, chacun de ces messages étant destiné à un module d'affichage 2 particulier. Dans un télégramme, les messages se succèdent continûment, en série sur la liaison série 13.

De même, chaque train de signaux délivré en A3 par le circuit modulateur 10, correspondant à un télégramme, est émis continûment, les messages se succédant.

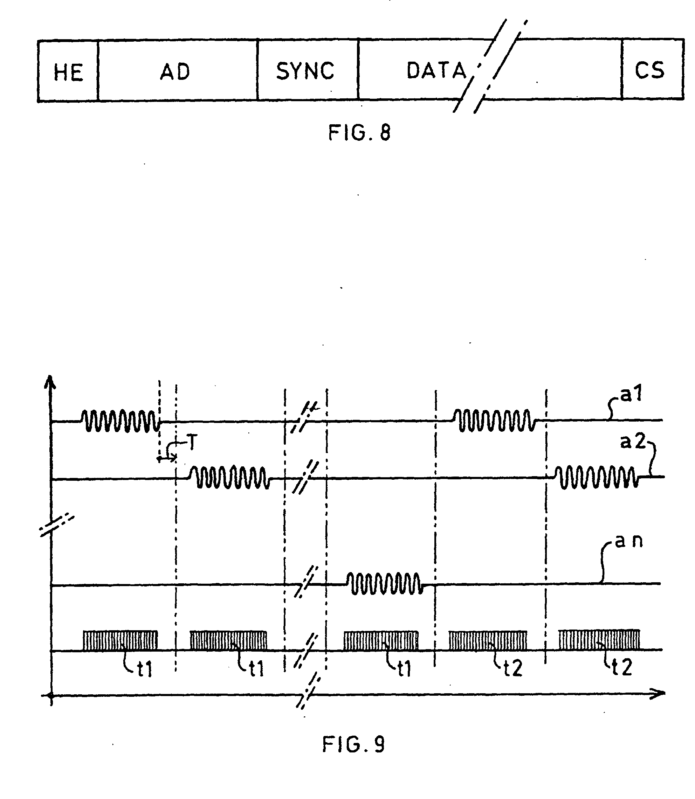

La figure 8 représente un format typique de message pour un module d'affichage 2 comprenant un champ d'en-tête HE, suivi d'un champ d'adresses AD dans lequel un numéro d'adresse du module d'affichage 2 est inscrit, un champ de synchronisation SYNC, puis un champ de données DATA correspondant aux données qui doivent être effectivement transmises aux modules d'affichage 2 (par exemple, le prix de l'article unitaire et le prix de l'article au kilo correspondant aux modules d'affichage 2), puis un champ CS de terminaison et de contrôle ("Checksum").

Pour chaque télégramme envoyé par le micro-ordinateur 9 au circuit modulateur 10, ce dernier délivre sur sa sortie au point A3, un train de signaux en courant électrique modulé. Ce train de signaux sinusoïdaux est transmis à une antenne d'émission par l'intermédiaire des moyens 11, 12 de commutation automatique, depuis le point A3.

Ces moyens 11, 12 de commutation automatique d'antenne comprennent un démultiplexeur 12 dont le nombre de sorties correspond au nombre d'antennes d'émission utilisées, par exemple deux dans le cas le plus courant. Ce démultiplexeur 12 relie son entrée A5 (qui est aussi la sortie du circuit amplificateur d'alimentation 11) à l'une de ses sorties, selon l'état d'un signal de commande qu'il reçoit en C d'un microprocesseur µP2.

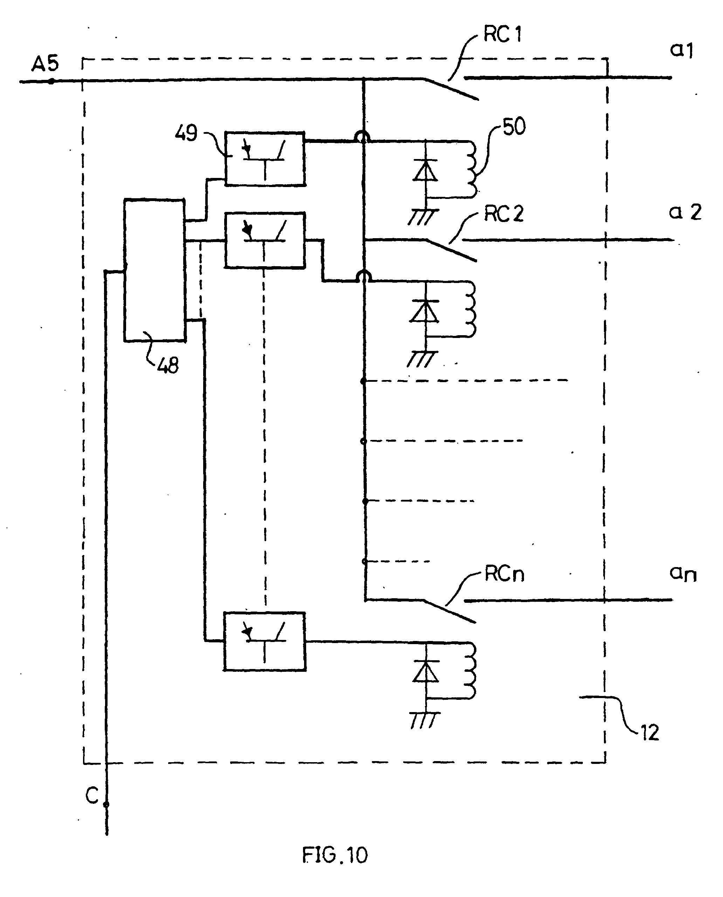

La figure 10 représente un mode de réalisation d'un tel circuit démultiplexeur 12, qui comporte au moins un circuit intégré décodeur démultiplexeur 48 présentant plusieurs sorties dont une seule est active à chaque instant (par exemple un circuit CMOS 4556 pour n ≤ 4, ou plusieurs tels circuits en cascade pour n > 4) recevant le signal de commande émis par le bus de sortie du registre 44 au point C.

Chaque sortie du circuit intégré 48 pilote un relais de commutation RC1, RC2, ..., RCn des antennes d'émission. Chaque relais de commutation permet de connecter l'une des antennes d'émission a1, a2, ..., an au point A5 (qui est la sortie du circuit 11 amplificateur d'alimentation) recevant les trains de signaux à émettre. Un montage darlington 49 est interposé entre chaque sortie du circuit intégré 48 et la bobine 50 du relais de commutation correspondante pour amplifier le signal.

Le circuit 11 amplificateur d'alimentation comprend le microprocesseur µP2 de commutation, des moyens 28 d'amplification des trains de signaux avec un gain qui peut être ajusté selon l'état d'un signal fourni par le microprocesseur µP2, et des moyens 29 d'adaptation d'impédance pour chaque antenne d'émission pouvant être commandés à partir du microprocesseur µP2. Le microprocesseur µP2 est programmé pour former des moyens de sélection automatique associant, lors de la connexion de chaque antenne d'émission à la sortie A5 du circuit amplificateur d'alimentation, des moyens d'adaptation d'impédance appropriés. Le circuit amplificateur d'alimentation 11 comprend également un circuit 30 fournissant une tension de contrôle sinusoïdale VCO de référence. Le micro-ordinateur 9 est relié en B par une liaison série 47 au microprocesseur µP2 du circuit amplificateur d'alimentation 11.

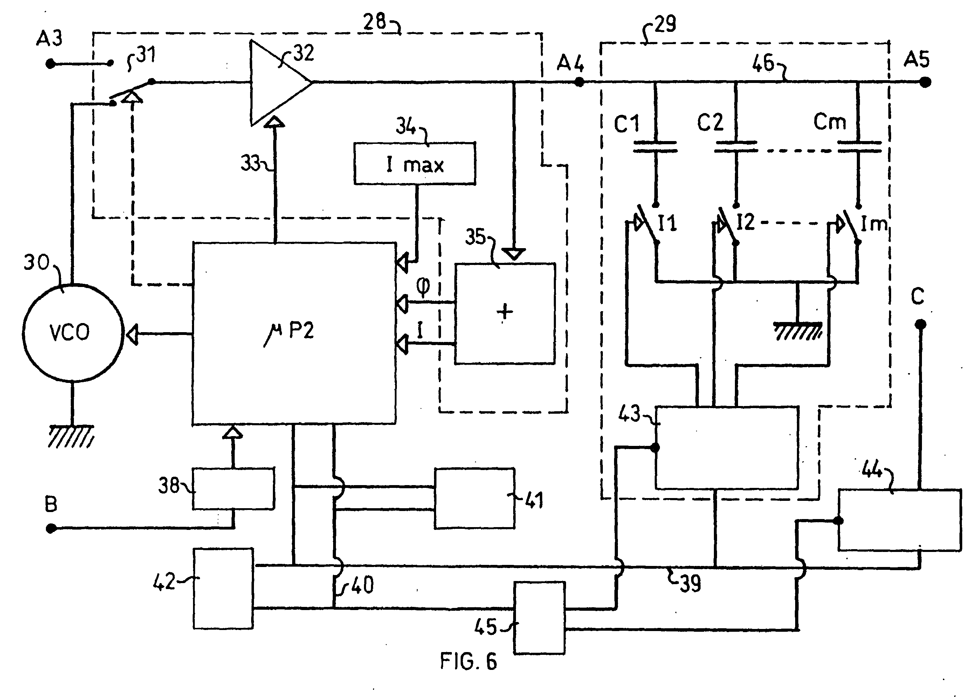

Sur la figure 1 on n'a représenté que schématiquement les fonctions remplies par le circuit amplificateur d'alimentation 11 qui est représenté plus en détail sur la figure 6. Les moyens 28 d'amplification comprennent un interrupteur 31 commandé par le microprocesseur µP2 pour relier, soit la sortie A3 du circuit oscillateur 17, soit la tension de contrôle sinusoïdale VCO à l'entrée d'un circuit électronique d'amplification 32. Ce circuit d'amplification 32 reçoit un signal du microprocesseur µP2 par une liaison 33 qui permet d'ajuster son gain. Le microprocesseur µP2 reçoit également d'une mémoire 34 la valeur maximum IMAX du courant admissible en sortie du circuit d'amplification 32. Par ailleurs, les caractéristiques du courant en sortie du circuit d'amplification 32 (intensité et tension) sont prélevées et fournies à un circuit 35 électronique qui est adapté pour délivrer au microprocesseur µP2 la valeur de l'intensité I du courant et la valeur de la phase φ entre la tension et le courant. Le circuit électronique 35 peut comporter un circuit sommateur adapté pour transformer l'intensité du courant en une tension et pour réaliser une somme de cette tension et de la tension en sortie du circuit 32, de façon à délivrer un signal représentatif de la phase φ entre la tension et l'intensité. Le signal provenant du micro-ordinateur 9 en B est délivré au microprocesseur µP2 par l'intermédiaire d'un registre à décalage 38 (UART). Le microprocesseur µP2 commande simultanément l'interrupteur 31 et le circuit 30 fournissant la tension de contrôle sinusoïdale.

Un bus de données 39 et un bus d'adresses 40 sont associés au microprocesseur µP2 et à une mémoire morte 41, et à une mémoire volatile 42. Ces bus 39, 40 sont reliés, d'une part à un registre 43 des moyens d'adaptation d'impédance, et d'autre part à un registre 44 fournissant en C le signal de commande du démultiplexeur 12.

Le bus d'adresses 40 est relié à ces registres 43, 44 pour sélectionner l'un d'entre eux, par l'intermédiaire d'un registre de sélection 45 qui adresse l'un ou l'autre des registres 43, 44 selon la valeur qu'il reçoit en entrée du bus d'adresses 40.

Les moyens 29 d'adaptation d'impédance comportent en outre une pluralité de condensateurs C1, C2, ..., Cm, reliés en parallèle à la ligne 46 s'étendant entre la sortie A4 du circuit d'amplification 32 et la sortie A5 des moyens 29 d'adaptation d'impédance. Chaque condensateur a sa borne opposée qui est reliée à un relais interrupteur I1, I2, ..., Im, qui lui correspond et qui est lui-même relié à la masse du circuit. Les différents interrupteurs I1, I2, ..., Im, sont commandés par le registre 43 qui mémorise des mots sur m bits.

Le nombre entier m est choisi, ainsi que la valeur des capacités des condensateurs, de telle sorte que l'on puisse établir entre la ligne 46 et la masse une valeur de capacité d'adaptation d'impédance correspondant aux antennes d'émission installées dans le local 6. Avantageusement, si C0 est la valeur de la capacité du premier condensateur C1, les valeurs des capacités des différents condensateurs sont choisies selon une suite géométrique de raison 2 (la capacité du condensateur Ck étant égal à Co x $2^k$).

Ainsi, grâce aux m condensateurs, on peut réaliser $2^m$ valeurs de capacité d'adaptation d'impédance. Ces $2^m$ valeurs correspondent également aux $2^m$ valeurs du mot sur m bits délivré par le registre 43 pour commander les m interrupteurs. Et les valeurs de la capacité varient dans le même sens que les valeurs de ce mot codées par le registre 43.

Le micro-ordinateur 9 et le microprocesseur $\mu$P2 sont programmés pour fonctionner selon un mode, dit mode de calibration d'impédance, avant toute émission de signal et autant que cela est considéré comme nécessaire, c'est-à-dire notamment après chaque modification éventuellement effectuée sur une antenne d'émission.

Ce mode de calibration d'impédance est déclenché par le micro-ordinateur 9 qui délivre un signal correspondant de calibration d'impédance au microprocesseur $\mu$P2. Lorsque ce microprocesseur $\mu$P2 reçoit ce signal, il relie le circuit d'amplification 32 au circuit 30 fournissant la tension de contrôle sinusoïdale qui est une tension de référence d'amplitude, de fréquence et de phase stables prédéterminées. Le microprocesseur $\mu$P2 est programmé pour procéder alors à une recherche dichotomique de la capacité optimale formée par les condensateurs C1 à Cm. Pour ce faire, il sélectionne donc tout d'abord la valeur médiane de la capacité (intermédiaire entre la valeur maximale obtenue avec tous les condensateurs reliés à la masse) et la valeur minimale C0. Cette capacité médiane étant sélectionnée, le microprocesseur $\mu$P2 augmente le gain du circuit d'amplification 32 jusqu'à ce que la valeur de l'intensité I, qui lui est fournie par le circuit 35, corresponde à la valeur maximum admissible qui lui est fournie par la mémoire 34. Dans cet état, le circuit microprocesseur $\mu$P2 recueille la valeur de la phase $\varphi$ et la mémorise. Il réitère ensuite l'ensemble de ces étapes après avoir sélectionné l'une des deux valeurs extrêmes de la capacité, par exemple la valeur maximum C0. Si la valeur de la phase $\varphi$ obtenue est supérieure à la précédente, le microprocesseur $\mu$P2 sélectionne l'autre valeur extrême, c'està-dire celle correspondant à la capacité minimale. Si la valeur de la phase obtenue est inférieure à celle obtenue précédemment, le microprocesseur $\mu$P2 sélectionne la valeur de la capacité intermédiaire entre les deux valeurs précédentes. Ainsi, le microprocesseur $\mu$P2 est programmé pour réaliser une recherche dichotomique de la valeur minimale de la phase $\varphi$ entre la tension et le courant, et ce de façon à minimiser les pertes en puissance réactive dans l'antenne d'émission sélectionnée. Lorsque le microprocesseur $\mu$P2 a déterminé la valeur correspondante de la capacité, il mémorise dans sa mémoire volatile 42 la valeur du mot identifiant cette capacité dans le registre 43, en l'associant au numéro d'antenne d'émission correspondant. Puis, il réitère l'ensemble de cet algorithme et de cette recherche de cette capacité optimale pour l'antenne d'émission suivante, et ainsi de suite pour toutes les antennes d'émission. A la fin de ce mode de calibration d'impédance, le microprocesseur $\mu$P2 a mémorisé dans sa mémoire volatile 42 les différentes valeurs à fournir au registre 43 pour adapter l'impédance des différentes antennes d'émission.

Dès lors, le microprocesseur $\mu$P2 renvoie un signal au micro-ordinateur 9 pour lui indiquer la fin du mode de calibration d'impédance. En outre, il envoie un signal à l'interrupteur 31 pour relier le point A3 à l'entrée du circuit d'amplification 32.

Ultérieurement, le circuit 11 amplificateur d'alimentation est adapté pour fonctionner selon un mode de commutation d'antenne sous la commande du micro-ordinateur 9. Lorsque le micro-ordinateur 9 émet un signal de commutation de l'antenne ai, le microprocesseur $\mu$P2 applique sur le registre 43 la valeur correspondante qu'il a préalablement mémorisée dans sa mémoire volatile 42 pour sélectionner les condensateurs correspondant à la capacité adaptée à cette antenne ai. Egalement, le registre de sélection 45 sélectionne et adresse le registre 44 qui reçoit sur le bus de données la valeur identifiant l'antenne d'émission ai à sélectionner et la transmet au démultiplexeur 12. Ainsi, on commute automatiquement l'antenne ai de rang i à partir d'une commande du micro-ordinateur 9. Comme on le voit sur la figure 7, le micro-ordinateur 9 est donc adapté pour commander le circuit 11 amplificateur d'alimentation selon une étape 23 de calibration d'impédance, puis selon une étape 24 de commutation de l'antenne a1 de rang 1. A la suite de cette étape 24, le micro-ordinateur commande le circuit 10 modulateur selon les étapes 18 à 22 décrites ci-dessus. Puis, le micro-ordinateur 9 commande le microprocesseur µP2 lors de l'étape 25 pour réaliser la commutation automatique de l'antenne ai+1 suivante. Il commande ensuite le circuit 10 modulateur lors d'une nouvelle étape d'émission 26, lors de laquelle le microprocesseur µP1 fournit à nouveau au circuit oscillateur 17 les données mémorisées dans sa mémoire volatile 15. Le micro-ordinateur 9 attend à nouveau la fin de la transmission de l'intégralité des données. L'ensemble de ces étapes est réitéré successivement jusqu'à ce que toutes les antennes d'émission a1, ..., an, aient été commutées et aient pu émettre les données à destination des modules d'affichage 2.

La succession des antennes d'émission peut se faire selon une permutation, par exemple de l'antenne a1 jusqu'à l'antenne an, jusqu'à ce que toutes les antennes aient été activées au moins une fois pour chaque train de signaux à émettre. Il est à noter que l'on peut commander, à partir du micro-ordinateur 9 la connexion permanente d'une seule antenne ou la permutation d'un sous-groupe d'antennes parmi les n antennes, par exemple à des fins de test.

La figure 9 représente un diagramme temporel des trains de signaux émis successivement par les différentes antennes a1, an. On a représenté sur ce diagramme l'exemple de deux télégrammes t1, t2 émis par le micro-ordinateur 9 par la liaison série 13 au point a1 près du circuit modulateur 10. Comme on le voit, le télégramme t1 est tout d'abord émis sous forme d'un train de signaux par l'antenne d'émission a1 puis, est répété par l'antenne d'émission a2, et ce successivement jusqu'à l'antenne d'émission an. Il est à noter qu'à chaque instant une seule antenne d'émission est active. Sur la figure 9, les traits verticaux mixtes pointillés représentent les instants où une commutation d'antenne d'émission est effectuée.

Dans le mode de réalisation décrit ci-dessus, c'est le micro-ordinateur 9 qui pilote et contrôle l'ensemble des moyens 1 d'émission de l'installation selon l'invention. En variante, on peut prévoir que le microprocesseur µP2 soit adapté et programmé pour effectuer lui-même la commutation des différentes antennes. Par exemple, lorsque l'intensité I du courant sortie du circuit d'amplification 32 s'annule pendant une durée au moins égale à une période prédéterminée T (représentée figure 9), le microprocesseur µP2 peut être programmé pour commander la commutation des antennes et la réémission du même signal, et ce jusqu'à ce que les n antennes aient émis séquentiellement le même train de signaux. Dans cette variante, le microprocesseur µP2 est aussi programmé pour émettre un signal de commande au micro-ordinateur 9 pour lui indiquer, pour chaque commutation d'une antenne d'émission, que la commutation est effectuée.

D'autres variantes de réalisation sont possibles par rapport aux modes de réalisation représentés et décrits sur les figures. En particulier, il est à noter que l'invention s'applique aussi avec avantages à une installation à transmission de type bidirectionnelle avec laquelle on évitera aussi les zones d'ombre. En outre, l'homme du métier pourra aisément réaliser, de façon connue en soi, les fonctions logiques électronique et informatique décrites ci-dessus et représentées.

## Revendications

**1.** Local, tel qu'un magasin de vente au détail, contenant une installation pour l'affichage électronique d'informations le long de gondoles (7) de réception de produits, ladite installation comprenant :

- des moyens (1) d'émission, à antenne d'émission en boucle de courant, de trains de signaux sinusoïdaux, sous forme d'ondes électromagnétiques modulées à basse ou moyenne fréquence selon des données à transmettre à des modules d'affichage (2),
- des modules d'affichage (2) électronique d'informations comprenant chacun un récepteur à antenne de réception polarisée selon une direction de polarisation (3) et adaptée pour capter principalement la composante magnétique des ondes émises, **caractérisé en ce que** les moyens (1) d'émission de l'installation comportent en combinaison:

  - une pluralité d'antennes d'émission (a1, a2, ..., an) en boucle de courant formant au moins des brins (b1, b2, ..., bn) s'étendant horizontalement, et disposés par rapport au local (6) de façon que, dans au moins une portion de l'espace (8) dans lequel des modules d'affichage (2) sont susceptibles d'être installés, toute zone, dite zone d'aplomb (ZA1, ZA2, ZA3, ZA4), qui est comprise dans une zone de portée d'un brin, dit premier brin, d'une première antenne d'émission, et qui est située au moins sensiblement à l'aplomb du premier brin selon la direction de polarisation des antennes de réception desdits modules d'affichage (2), est couverte par une zone de portée (ZP1, ZP2, ZP3, ZP4) d'au moins un deuxième brin appartenant à une deuxième antenne d'émission distincte de la première antenne d'émission,
  - des moyens (11, 12) de commutation automatique adaptés pour appliquer sur les différentes antennes d'émission, l'une après l'autre, chacun des trains de signaux qui est donc émis et répété successivement par les différentes antennes d'émission, de sorte que tout module d'affichage (2) dans la zone d'aplomb du premier brin reçoit les ondes émises et que le local (6) est exempt de zone d'ombre.

2. Local selon la revendication 1, **caractérisé en ce que** les antennes d'émission (a1, a2, ..., an) de l'installation sont disposées par rapport au local (6), de telle sorte que pour au moins une partie de l'espace (8) dans lequel des modules d'affichage sont susceptibles d'être installés, toute zone d'aplomb (ZA1, ZA2, ZA3, ZA4) d'un premier brin d'une première antenne d'émission est couverte par une zone de portée (ZP1, ZP2, ZP3, ZP4) d'au moins un deuxième brin d'une deuxième antenne d'émission distincte.

3. Local selon l'une des revendications 1 et 2, **caractérisé en ce que** les antennes d'émission (a1, a2, ..., an) de l'installation sont disposées par rapport au local (6) de telle sorte que pour tout l'espace (8) dans lequel des modules d'affichage sont susceptibles d'être installés, toute zone d'aplomb (ZA1, ZA2, ZA3, ZA4) d'un premier brin d'une première antenne d'émission est couverte par une zone de portée (ZP1, ZP2, ZP3, ZP4) d'au moins un deuxième brin d'une deuxième antenne d'émission distincte.

4. Local selon l'une des revendications 1 à 3, **caractérisé en ce que** pour chacun desdits brins s'étendant horizontalement, au moins une portion de la zone d'aplomb (ZA1, ZA2, ZA3, ZA4) d'un premier brin d'une première antenne d'émission n'est pas coupée par une zone d'aplomb d'un deuxième brin d'une deuxième antenne d'émission distincte de la première antenne d'émission.

5. Local selon la revendication 4, **caractérisé en ce que** pour chacun des brins, ladite portion de la zone d'aplomb (ZA1, ZA2, ZA3, ZA4) comprend toute la zone à l'aplomb du premier brin selon la direction de polarisation des antennes de réception à l'exception, s'il en existe, des zones à l'aplomb de l'intersection du premier et du deuxième brin, selon la direction de polarisation des antennes de réception.

6. Local selon l'une des revendications 1 à 5, **caractérisé en ce que** les antennes d'émission de l'installation sont disposées par rapport au local (6) de façon que les zones d'aplomb dans l'espace (8), dans lequel des modules d'affichage sont susceptibles d'être installés, sont disjointes.

7. Local selon l'une des revendications 1 à 6, **caractérisé en ce que** les antennes d'émission (a1, a2, ..., an) de l'installation sont disposées, compte tenu de la puissance d'émission des moyens (1) d'émission, de telle sorte que dans l'espace (8) couvrant toute la surface utile du sol (5) du local (6) et s'étendant sur une hauteur supérieure ou égale à celle des gondoles (7), tout point est couvert par les zones de portée (ZP1, ZP2, ZP3, ZP4) d'au moins deux brins (b1, b2, b3, b4) distincts dont l'un appartient à une première antenne d'émission, tandis que l'autre appartient à une deuxième antenne d'émission distincte de la première antenne d'émission.

8. Local selon l'une des revendications 1 à 4, **caractérisé en ce que** toutes les antennes d'émission (a1, a2, ..., an) de l'installation ont sensiblement la même forme générale -notamment polygonale-.

9. Local selon l'une des revendications 1 à 5, **caractérisé en ce que** l'installation comprend au moins un groupe de brins (b1, b2, ..., bn) des différentes antennes d'émission (a1, a2, ..., an) qui s'étendent au moins sensiblement horizontalement et parallèlement les uns aux autres.

10. Local selon l'une des revendications 1 à 9, **caractérisé en ce que** chaque antenne d'émission (a1, a2, ..., an) de l'installation s'étend globalement dans un plan horizontal.

11. Local selon l'une des revendications 1 à 10, **caractérisé en ce que** toutes les antennes d'émission (a1, a2, ..., an) de l'installation s'étendent globalement dans un même plan horizontal.

12. Local selon l'une des revendications 1 à 11, **caractérisé en ce que** les différentes antennes d'émission (a1, a2, ..., an) de l'installation sont disposées de façon concentrique.

13. Local selon l'une des revendications 1 à 11, **caractérisé en ce que** les différentes antennes d'émission (a1, a2, ..., an) de l'installation sont disposées décalées latéralement les unes des autres.

14. Local selon l'une des revendications 1 à 13, **caractérisé en ce que** l'installation comprend deux antennes d'émission (a1, a2) placées dans un même plan horizontal, de formes semblables adaptées pour couvrir toute la surface du local (6), la distance d séparant les brins des deux antennes (a1, a2) étant en tous points inférieure à $\sqrt{(r^2 - h^2)}$ où R est le rayon de portée des antennes (a1, a2) et h est la hauteur séparant les brins des antennes (a1, a2) du plan horizontal le plus éloigné susceptible de contenir un module d'affichage (2).

15. Local selon l'une des revendications 1 à 14, **caractérisé en ce que** les moyens (11, 12) de commutation automatique de l'installation sont adaptés pour appliquer successivement chacun des trains de signaux sur les différentes antennes d'émission (a1, a2, ..., an) selon une permutation.

16. Local selon l'une des revendications 1 à 15, **caractérisé en ce que** les modules d'affichage (2) de l'installation sont exempts de moyens d'émission, la transmission des signaux étant unidirectionnelle des antennes d'émission (a1, a2, ..., an) vers les modules d'affichage (2).

17. Local selon l'une des revendications 1 à 16, **caractérisé en ce que** l'installation comporte un ordinateur de contrôle (9) relié aux moyens (1) d'émission et programmé pour leur délivrer des séries de données numériques à transmettre aux modules d'affichage (2), et pour répéter chaque série de données successivement conformément au nombre d'antennes d'émission (a1, a2, ..., an).

18. Local d'installation selon la revendication 17, **caractérisé en ce que** le micro-ordinateur (9) de l'installation est programmé pour commander la commutation des antennes d'émission (a1, a2, ..., an).

19. Local selon l'une des revendications 1 à 17, **caractérisé en ce que** les moyens (11, 12) de commutation automatique de l'installation comportent un circuit à microprocesseur (µP2) adapté et programmé pour commander la commutation des antennes d'émission (a1, a2, ..., an) lorsque le signal est nul pendant une durée prédéterminée.

20. Local selon l'une des revendications 1 à 19, **caractérisé en ce que** les moyens (11, 12) de commutation automatique de l'installation comprennent un démultiplexeur (12) interposé entre une sortie (A5) d'un circuit (11) amplificateur d'alimentation en trains de signaux et les différentes antennes (a1, a2, ..., an), et adapté pour relier cette sortie (A5) à une et une seule antenne d'émission (a1, a2 ..., an), et pour commuter sur cette sortie (A5) les différentes antennes d'émission (a1, a2, ..., an) successivement sous la commande d'un circuit (µP2) à microprocesseur relié au démultiplexeur (12) pour lui fournir un signal de commande.

21. Local selon l'une des revendications 1 à 20, **caractérisé en ce que** les moyens (11, 12) de commutation automatique de l'installation comportent des moyens (29) d'adaptation d'impédance pour chaque antenne d'émission (a1, a2, ..., an), comprenant des moyens (µP2, 42, 43) de sélection automatique adaptés pour associer, lors de la connexion de chaque antenne d'émission (a1, a2, ..., an) à la sortie d'un circuit (11) amplificateur d'alimentation en trains de siqnaux, une impédance (C1, C2, ..., Cm) de valeur appropriée adaptée à l'antenne d'émission connectée.

22. Procédé de mise en place d'une installation pour l'affichage électronique d'informations le long de gondoles (7) de réception de produits dans un local (6) tel qu'un magasin de vente au détail, ledit procédé comprenant les étapes suivantes:

- la mise en place de moyens (1) d'émission, à antenne d'émission en boucle de courant, de trains de signaux sinusoïdaux, sous forme d'ondes électromagnétiques modulées à basse ou moyenne fréquence selon des données à transmettre à des modules d'affichage (2),
- la mise en place de modules d'affichage (2) électronique d'informations comprenant chacun un récepteur à antenne de réception polarisée selon une direction de polarisation (3) et adaptée pour capter principalement la composante magnétique des ondes émises,

**caractérisé en ce que** les moyens (1) d'émission de l'installation comportent en combinaison une pluralité d'antennes d'émission (a1, a2, ..., an) en boucle de courant et des moyens de communication :

- la mise en place d'antennes d'émission formant au moins des brins (b1, b2, ..., bn) s'étendant horizontalement et disposés par rapport au local (6) de façon que dans au moins une portion de l'espace (8) dans lequel des modules d'affichage (2) sont susceptibles d'être installés, toute zone, dite zone d'aplomb (ZA1, ZA2, ZA3, ZA4), qui est comprise dans une zone de portée d'un brin, dit premier brin, d'une première antenne d'émission, et qui est située au moins sensiblement à l'aplomb du premier brin selon la direction de polarisation des antennes de réception desdits modules d'affichage (2), est couverte par une zone de portée (ZP1, ZP2, ZP3, ZP4) d'au moins un deuxième brin appartenant à une deuxième antenne d'émission distincte de la première antenne d'émission,
- la mise en place de moyens (11, 12) de commutation automatique adaptés pour appliquer sur les différentes antennes d'émission, l'une après l'autre, chacun des trains de signaux qui est donc émis et répété successivement par les différentes antennes d'émission, de sorte que tout module d'affichage (2) dans la zone d'aplomb du premier brin reçoit les ondes émises et que le local (6) est exempt de zone d'ombre.

23. Procédé selon la revendication 22, **caractérisé en ce que** l'on dispose les antennes d'émission (a1, a2, ..., an) par rapport au local ( 6 ) , de telle sorte que pour au moins une partie de l'espace (8) dans lequel des modules d'affichage sont susceptibles d'être installés, toute zone d'aplomb (ZA1, ZA2, ZA3, ZA4) d'un premier brin d'une première antenne d'émission est couverte par une zone de portée (ZP1, ZP2, ZP3, ZP4) d'au moins un deuxième brin d'une deuxième antenne d'émission distincte.

24. Procédé selon l'une des revendications 22 et 23, **caractérisé en ce que** l'on dispose les antennes d'émission (a1, a2, ..., an) par rapport au local (6) de telle sorte que pour tout l'espace (8) dans lequel des modules d'affichage sont susceptibles d'être installés, toute zone d'aplomb (ZA1, ZA2, ZA3, ZA4) d'un premier brin d'une première antenne d'émission est couverte par une zone de portée (ZP1, ZP2, ZP3, ZP4) d'au moins un deuxième brin d'une deuxième antenne d'émission distincte.

25. Procédé selon l'une des revendications 22 à 24, **caractérisé en ce que**, pour chacun desdits brins s'étendant horizontalement, au moins une portion de la zone d'aplomb (ZA1, ZA2, ZA3, ZA4) d'un premier brin d'une première antenne d'émission n'est pas coupée par une zone d'aplomb d'un deuxième brin d'une deuxième antenne d'émission distincte de la première antenne d'émission.

26. Procédé selon la revendication 25, **caractérisé en ce que** pour chacun des brins, ladite portion de la zone d'aplomb (ZA1, ZA2, ZA3, ZA4) comprend toute la zone à l'aplomb du premier brin selon la direction de polarisation des antennes de réception à l'exception, s'il en existe, des zones à l'aplomb de l'intersection du premier et du deuxième brin, selon la direction de polarisation des antennes de réception.

27. Procédé selon l'une des revendications 22 à 26, **caractérisé en ce que** l'on dispose les antennes d'émission par rapport au local (6) de façon que les zones d'aplomb dans l'espace (8), dans lequel des modules d'affichage sont susceptibles d'être installés, sont disjointes.

28. Procédé selon l'une des revendications 22 à 27, **caractérisé en ce que** l'on dispose les antennes d'émission (a1, a2, ..., an), compte tenu de la puissance d'émission des moyens (1) d'émission, de telle sorte que dans l'espace (8) couvrant toute la surface utile du sol (5) du local (6) et s'étendant sur une hauteur supérieure ou égale à celle des gondoles (7), tout point est couvert par les zones de portée (ZP1, ZP2, ZP3, ZP4) d'au moins deux brins (b1, b2, b3, b4) distincts dont l'un appartient à une première antenne d'émission, tandis que l'autre appartient à une deuxième antenne d'émission distincte de la première antenne d'émission.

29. Procédé selon l'une des revendications 22 à 25, **ca-**

**ractérisé en ce que** toutes les antennes d'émission (a1, a2, ..., an) ont sensiblement la même forme générale, -notamment polygonale-.

30. Procédé selon l'une des revendications 22 à 26, **caractérisé en ce qu'**au moins un groupe de brins (b1, b2, ..., bn) des différentes antennes d'émission (a1, a2, ..., an) s'étendent au moins sensiblement horizontalement et parallèlement les uns aux autres.

31. Procédé selon l'une des revendications 22 à 30, **caractérisé en ce que** chaque antenne d'émission (a1, a2, ..., an) de l'installation s'étend globalement dans un plan horizontal.

32. Procédé selon l'une des revendications 22 à 31, **caractérisé en ce que** toutes les antennes d'émission (a1, a2, ..., an) de l'installation s'étendent globalement dans un même plan horizontal.

33. Procédé selon l'une des revendications 22 à 32, **caractérisé en ce que** l'on dispose les différentes antennes d'émission (a1, a2, ..., an) de façon concentrique.

34. Procédé selon l'une des revendications 22 à 32, **caractérisé en ce que** l'on dispose les différentes antennes d'émission (a1, a2, ..., an) décalées latéralement les unes des autres.

35. Procédé selon l'une des revendications 22 à 34, **caractérisé en ce que** l'installation comprend deux antennes d'émission (a1, a2) placées dans un même plan horizontal, de formes semblables adaptées pour couvrir toute la surface du local (6), la distance d séparant les brins des deux antennes (a1, a2) étant en tous points inférieure à $\sqrt{(r^2 - h^2)}$ où R est le rayon de portée des antennes (a1, a2) et h est la hauteur séparant les brins des antennes (a1, a2) du plan horizontal le plus éloigné susceptible de contenir un module d'affichage (2).

36. Procédé selon l'une des revendications 22 à 35, **caractérisé en ce que** les moyens (11, 12) de commutation automatique sont adaptés pour appliquer successivement chacun des trains de signaux sur les différentes antennes d'émission (a1, a2, ..., an) selon une permutation.

37. Procédé selon l'une des revendications 22 à 36, **caractérisé en ce que** les modules d'affichage (2) sont exempts de moyens d'émission, la transmission des signaux étant unidirectionnelle des antennes d'émission (a1, a2, ..., an) vers les modules d'affichage (2).

38. Procédé selon l'une des revendications 22 à 37, **ca-**

ractérisé en ce que l'installation comporte un ordinateur de contrôle (9) relié aux moyens (1) d'émission et programmé pour leur délivrer des séries de données numériques à transmettre aux modules d'affichage (2), et pour répéter chaque série de données successivement conformément au nombre d'antennes d'émission (a1, a2, ..., an).

39. Procédé d'installation selon la revendication 38, caractérisé en ce que le micro-ordinateur (9) de l'installation est programmé pour commander la commutation des antennes d'émission (a1, a2, ..., an).

40. Procédé selon l'une des revendications 22 à 38, caractérisé en ce que les moyens (11, 12) de commutation automatique de l'installation comportent un circuit à microprocesseur (µP2) adapté et programmé pour commander la commutation des antennes d'émission (a1, a2, ..., an) lorsque le signal est nul pendant une durée prédéterminée.

41. Procédé selon l'une des revendications 22 à 40, caractérisé en ce que les moyens de (11, 12) commutation automatique de l'installation comprennent un démultiplexeur (12) interposé entre une sortie (A5) d'un circuit (11) amplificateur d'alimentation en trains de signaux et les différentes antennes (a1, a2, ..., an), et adapté pour relier cette sortie (A5) à une et une seule antenne d'émission (a1, a2 ..., an), et pour commuter sur cette sortie (A5) les différentes antennes d'émission (a1, a2, ..., an) successivement sous la commande d'un circuit (µP2) à microprocesseur relié au démultiplexeur (12) pour lui fournir un signal de commande.

42. Procédé selon l'une des revendications 22 à 41, caractérisé en ce que les moyens (11, 12) de commutation automatique de l'installation comportent des moyens (29) d'adaptation d'impédance pour chaque antenne d'émission (a1, a2, ..., an), comprenant des moyens (pP2, 42, 43) de sélection automatique adaptés pour associer, lors de la connexion de chaque antenne d'émission (a1, a2, ..., an) à la sortie d'un circuit (11) amplificateur d'alimentation en trains de signaux, une impédance (C1, C2, ..., Cm) de valeur appropriée adaptée à l'antenne d'émission connectée.

**Patentansprüche**

1. Räumlichkeit, wie eine Verkaufsstätte für Einzelwaren, die eine Einrichtung zur elektronischen Anzeige von Informationen an Fächern (7) zur Aufnahme von Waren enthält, wobei die Einrichtung umfaßt:

- Mittel (1) zum Senden mit einer Sendeantenne in Form einer Stromschleife von sinusförmigen Signalfolgen in Form von elektromagnetischen Wellen, die abhängig von den zu Anzeigeeinheiten (2) zu übertragenden Daten mit niedriger oder mittlerer Frequenz moduliert sind,

- Einheiten (2) zur elektronischen Anzeige von Informationen, von denen jede einen Empfänger mit Empfangsantenne umfaßt, die entlang einer Polarisationsrichtung (3) polarisiert ist und ausgebildet ist, um hauptsächlich die magnetische Komponente der ausgesendeten Wellen zu erfassen, dadurch gekennzeichnet, daß die Sendemittel (1) der Einrichtung in Kombination aufweisen:

 - mehrere Sendeantennen (a1, a2, ..., an) in Form einer Stromschleife, die zumindest Elementarantennen (b1, b2, ..., bn) bilden, die sich horizontal erstrecken und bezüglich der Räumlichkeit (6) derart angeordnet sind, daß in wenigstens einem Teil des Raumes (8), in dem Anzeigeeinheiten (2) installiert werden können, der ganze Bereich, der sogenannte Lotbereich (ZA1, ZA2, ZA3, ZA4), der in einem Wirkungsbereich einer Elementarantenne, genannt erste Elementarantenne, einer ersten Sendeantenne liegt und der zumindest im wesentlichen im Lot der ersten Elementarantenne entlang der Polarisationsrichtung der Empfangsantennen der Anzeigeeinheiten (2) gelegen ist, von einem Wirkungsbereich (ZP1, ZP2, ZP3, ZP4) mindestens einer zweiten Elementarantenne abgedeckt wird, die zu einer von der ersten Sendeantenne verschiedenen zweiten Sendeantenne gehört,

 - Mittel (11, 12) zur automatischen Schaltung, die ausgebildet sind, um nacheinander auf die verschiedenen Sendeantennen jede der Signalfolgen anzuwenden, die dann von den verschiedenen Sendeantennen derart ausgesendet und sukzessive wiederholt wird, daß die gesamte Anzeigeeinheit (2) im Lotbereich der ersten Elementarantenne die ausgesendeten Wellen empfängt und daß die Räumlichkeit (6) frei von einem Schattenbereich ist.

2. Räumlichkeit nach Anspruch 1, dadurch gekennzeichnet, daß die Sendenantennen (a1, a2, ..., an) der Einrichtung bezüglich der Räumlichkeit (6) derart angeordnet sind, daß zumindest für einen Teil des Raumes (8), in dem Anzeigeeinheiten installiert werden können, der gesamte Lotbereich (ZA1, ZA2, ZA3, ZA4) einer ersten Elementarantenne einer ersten Sendeantenne von einem Wirkungsbereich (ZP1, ZP2, ZP3, ZP4) mindestens einer zweiten Elementarantenne einer zweiten verschiedenen Sendeantenne abgedeckt wird.

3. Räumlichkeit nach Anspruch 1 oder 2, **dadurch gekennzeichnet, daß** die Sendeantennen (a1, a2, ..., an) der Einrichtung bezüglich der Räumlichkeit (6) derart angeordnet sind, daß für den gesamten Raum (8), in dem Anzeigeeinheiten installiert werden können, der gesamte Lotbereich (ZA1, ZA2, ZA3, ZA4) einer ersten Elementarantenne einer ersten Sendeantenne von einem Wirkungsbereich (ZP1, ZP2, ZP3, ZP4) mindestens einer zweiten Elementarantenne einer zweiten verschiedenen Sendeantenne abgedeckt wird.

4. Räumlichkeit nach einem der Ansprüche 1 bis 3, **dadurch gekennzeichnet, daß** für jede der sich horizontal erstreckenden Elementarantennen zumindest ein Teil der Lotzone (ZA1, ZA2, ZA3, ZA4) einer ersten Elementarantenne einer ersten Sendeantenne nicht von einem Lotbereich einer von der ersten Sendeantenne verschiedenen zweiten Sendeantenne geschnitten wird.

5. Räumlichkeit nach Anspruch 4, **dadurch gekennzeichnet, daß** für jede der Elementarantennen der Teil des Lotbereichs (ZA1, ZA2, ZA3, ZA4) den gesamten Bereich im Lot der ersten Elementarantenne entlang der Polarisationsrichtung der Empfangsantennen umfaßt mit Ausnahme der Bereiche, wenn sie existieren, im Lot der Schnittstelle der ersten und zweiten Elementarantenne entlang der Polarisationsrichtung der Empfangsantennen.

6. Räumlichkeit nach einem der Ansprüche 1 bis 5, **dadurch gekennzeichnet, daß** die Sendeantennen der Einrichtung bezüglich der Räumlichkeit (6) derart angeordnet sind, daß die Lotbereiche in dem Raum (8), in dem Anzeigeeinheiten installiert werden können, voneinander getrennt sind.

7. Räumlichkeit nach einem der Ansprüche 1 bis 6, **dadurch gekennzeichnet, daß** die Sendeantennen (a1, a2, ..., an) der Einrichtung unter Berücksichtigung der Sendeleistung der Sendemittel (1) derart angeordnet sind, daß in dem Raum (8), der die gesamte Nutzfläche des Bodens (5) der Räumlichkeit (6) abdeckt und sich höher oder gleich hoch wie die Fächer (7) erstreckt, jeder Punkt von den Wirkungsbereichen (ZP1, ZP2, ZP3, ZP4) mindestens zweier verschiedener Elementarantennen (b1, b2, b3, b4) abgedeckt ist, von denen die eine zu einer ersten Sendeantenne gehört, während die andere zu einer von der ersten Sendeantenne verschiedenen zweiten Sendeantenne gehört.

8. Räumlichkeit nach einem der Ansprüche 1 bis 4, **dadurch gekennzeichnet, daß** alle Sendeantennen (a1, a2, ..., an) der Einrichtung im wesentlichen dieselbe allgemeine, insbesondere polygonale, Form aufweisen.

9. Räumlichkeit nach einem der Ansprüche 1 bis 5, **dadurch gekennzeichnet, daß** die Einrichtung mindestens eine Gruppe von Elementarantennen (b1, b2, ..., bn) von verschiedenen Sendeantennen (a1, a2, ..., an) umfaßt, die sich zumindest im wesentlichen horizontal und parallel zueinander erstrecken.

10. Räumlichkeit nach einem der Ansprüche 1 bis 9, **dadurch gekennzeichnet, daß** sich jede Sendeantenne (a1, a2, ..., an) der Einrichtung vollständig in einer horizontalen Ebene erstreckt.

11. Räumlichkeit nach einem der Ansprüche 1 bis 10, **dadurch gekennzeichnet, daß** sich alle Sendeantennen (a1, a2, ..., an) der Einrichtung vollständig in einer selben horizontalen Ebene erstrecken.

12. Räumlichkeit nach einem der Ansprüche 1 bis 11, **dadurch gekennzeichnet, daß** die verschiedenen Sendeantennen (a1, a2, ..., an) der Einrichtung konzentrisch angeordnet sind.

13. Räumlichkeit nach einem der Ansprüche 1 bis 11, **dadurch gekennzeichnet, daß** die verschiedenen Sendeantennen (a1, a2, ..., an) der Einrichtung seitlich zueinander verschoben angeordnet sind.

14. Räumlichkeit nach einem der Ansprüche 1 bis 13, **dadurch gekennzeichnet, daß** die Einrichtung zwei Sendeantennen (a1, a2), die in einer selben horizontalen Ebene angeordnet sind, von ähnlicher Form umfaßt, die ausgebildet sind, um die gesamte Oberfläche der Räumlichkeit (6) abzudecken, wobei der Abstand d, der die Elementarantennen der beiden Antennen (a1, a2) voneinander trennt, an allen Punkten kleiner als $\sqrt{(r^2 - h^2)}$ ist, wobei r der Wirkungsradius der Antennen (a1, a2) ist und h die Höhe ist, die die Elementarantennen der Antennen (a1, a2) von der am weitesten entfernten horizontalen Ebene, die eine Anzeigeeinheit (2) enthalten kann, trennt.

15. Räumlichkeit nach einem der Ansprüche 1 bis 14, **dadurch gekennzeichnet, daß** die Mittel (11, 12) zur automatischen Schaltung der Einrichtung ausgebildet sind, um sukzessive jeweils Signalfolgen auf die verschiedenen Sendeantennen (a1, a2, ..., an) gemäß einer Permutation anzuwenden.

16. Räumlichkeit nach einem der Ansprüche 1 bis 15, **dadurch gekennzeichnet, daß** die Anzeigeeinheiten (2) der Einrichtung frei von Sendemitteln sind, wobei die Übertragung der Signale in einer Richtung von den Sendeantennen (a1, a2, ..., an) zu den Anzeigeeinheiten (2) stattfindet.

17. Räumlichkeit nach einem der Ansprüche 1 bis 16, **dadurch gekennzeichnet, daß** die Einrichtung einen Steuercomputer (9) aufweist, der mit den Sendemitteln (1) verbunden ist und programmiert ist, um ihnen Serien von numerischen Daten zum Übertragen an die Anzeigeeinheiten (2) zu liefern und um jede Serie von Daten sukzessive entsprechend der Anzahl der Sendeantennen (a1, a2, ..., an) zu wiederholen.

18. Räumlichkeit der Einrichtung nach Anspruch 17, **dadurch gekennzeichnet, daß** der Mikrocomputer (9) der Einrichtung programmiert ist, um das Schalten der Sendeantennen (a1, a2, ..., an) zu steuern.

19. Räumlichkeit nach einem der Ansprüche 1 bis 17, **dadurch gekennzeichnet, daß** die Mittel (11, 12) zur automatischen Schaltung der Einrichtung einen Mikroprozessorschaltkreis (µP2) aufweisen, der ausgebildet und programmiert ist, um das Schalten der Sendeantennen (a1, a2, ..., an) zu steuern, wenn das Signal während einer vorbestimmten Dauer null ist.

20. Räumlichkeit nach einem der Ansprüche 1 bis 19, **dadurch gekennzeichnet, daß** die Mittel (11, 12) zur automatischen Schaltung der Einrichtung einen Demultiplexer (12) umfassen, der zwischen einem Ausgang (A5) einer Verstärkerschaltung (11) zum Liefern der Signalfolgen und den verschiedenen Antennen (a1, a2, ..., an) geschaltet ist und ausgebildet ist, um diesen Ausgang (A5) mit einer einzigen Sendeantenne (a1, a2, ..., an) zu verbinden und um die verschiedenen Sendeantennen (a1, a2, ..., an) sukzessive unter der Steuerung eines Mikroprozessorschaltkreises (µP2), der mit dem Demultiplexer (12) verbunden ist, um ihm ein Steuersignal zu liefern, auf diesen Ausgang (A5) zu schalten.

21. Räumlichkeit nach einem der Ansprüche 1 bis 20, **dadurch gekennzeichnet, daß** die Mittel (11, 12) zur automatischen Schaltung der Einrichtung Mittel (29) zur Anpassung der Impedanz für jede Sendeantenne (a1, a2, ..., an) aufweisen, die Mittel (µP2, 42, 43) zur automatischen Selektion umfassen, die ausgebildet sind, um bei Verbindung jeder Sendeantenne (a1, a2, ..., an) mit dem Ausgang einer Verstärkerschaltung (11) zum Liefern der Signalfolgen eine Impedanz (C1, C2, ..., Cn) mit geeignetem Wert festzulegen, der an die verbundene Sendeantenne angepaßt ist.

22. Verfahren zum Installieren einer Einrichtung zur elektronischen Anzeige von Informationen an Fächern (7) zur Aufnahme von Waren in einer Räumlichkeit (6) wie einer Verkaufsstätte für Einzelwaren, wobei das Verfahren die folgenden Schritte umfaßt:

- Installieren von Mitteln (1) zum Senden mit einer Sendeantenne in Form einer Stromschleife von sinusförmigen Signalfolgen in Form von elektromagnetischen Wellen, die abhängig von den zu Anzeigeeinheiten (2) zu übertragenden Daten mit niedriger oder mittlerer Frequenz moduliert sind,

- Installieren von Einheiten (2) zur elektronischen Anzeige von Informationen, von denen jede einen Empfänger mit Empfangsantenne umfaßt, die entlang einer Polarisationsrichtung (3) polarisiert ist und ausgebildet ist, um hauptsächlich die magnetische Komponente der ausgesendeten Wellen zu erfassen, **dadurch gekennzeichnet, daß** die Sendemittel (1) der Einrichtung in Kombination mehrere Sendenantennen (a1, a2, ..., an) in Form einer Stromschleife und Kommunikationsmittel aufweisen:

- Installieren von Sendeantennen, die zumindest Elementarantennen (b1, b2, ..., bn) bilden, die sich horizontal erstrecken und bezüglich der Räumlichkeit (6) derart angeordnet sind, daß zumindest in einem Teil des Raumes (8), in dem Anzeigeeinheiten (2) installiert werden können, der ganze Bereich, der sogenannte Lotbereich (ZA1, ZA2, ZA3, ZA4), der in einem Wirkungsbereich einer Elementarantenne, genannt erste Elementarantenne, einer ersten Sendeantenne liegt und der zumindest im wesentlichen im Lot der ersten Elementarantenne entlang der Polarisationsrichtung der Empfangsantennen der Anzeigeeinheiten (2) gelegen ist, von einem Wirkungsbereich (ZP1, ZP2, ZP3, ZP4) mindestens einer zweiten Elementarantenne abgedeckt wird, die zu einer von der ersten Sendeantenne verschiedenen zweiten Sendeantenne gehört,

- Installieren von Mitteln (11, 12) zur automatischen Schaltung, die ausgebildet sind, um nacheinander auf die verschiedenen Sendeantennen jede der Signalfolgen anzuwenden, die dann von den verschiedenen Sendeantennen derart ausgesendet und sukzessive wiederholt wird, daß die gesamte Anzeigeeinheit (2) im Lotbereich der ersten Elementarantenne die ausgesendeten Wellen empfängt und daß die Räumlichkeit (6) frei von einem Schattenbereich ist.

23. Verfahren nach Anspruch 22, **dadurch gekennzeichnet, daß** die Sendeantennen (a1, a2, ..., an) bezüglich der Räumlichkeit (6) derart angeordnet werden, daß für zumindest einen Teil des Raumes (8), in dem Anzeigeeinheiten installiert werden können, der ganze Lotbereich (ZA1, ZA2, ZA3, ZA4) einer ersten Elementarantenne einer ersten Sendeantenne von einem Wirkungsbereich (ZP1, ZP2, ZP3, ZP4) mindestens einer zweiten Elementarantenne einer zweiten verschiedenen Sendeantenne abgedeckt wird.

24. Verfahren nach Anspruch 22 oder 23, **dadurch gekennzeichnet, daß** die Sendeantennen (a1, a2, ..., an) bezüglich der Räumlichkeit (6) derart angeordnet werden, daß für den gesamten Raum (8), in dem Anzeigeeinheiten installiert werden, der gesamte Lotbereich (ZA1, ZA2, ZA3, ZA4) einer ersten Elementarantenne einer ersten Sendeantenne von einem Wirkungsbereich (ZP1, ZP2, ZP3, ZP4) mindestens einer zweiten Elementarantenne einer zweiten verschiedenen Sendeantenne abgedeckt wird.

25. Verfahren nach einem der Ansprüche 22 bis 24, **dadurch gekennzeichnet, daß** für jede der sich hori-zontal erstreckenden Elementarantennen zumin-dest ein Teil des Lotbereichs (ZA1, ZA2, ZA3, ZA4) einer ersten Elementarantenne einer ersten Sendeantenne nicht von einem Lotbereich einer zweiten Elementarantenne einer von der ersten Sendean-tenne verschiedenen zweiten Sendeantenne ge-schnitten wird.

26. Verfahren nach Anspruch 25, **dadurch gekennzeichnet, daß** für jede der Elementarantennen der Teil des Lotbereichs (ZA1, ZA2, ZA3, ZA4) den gesamten Bereich im Lot der ersten Elementarantenne entlang der Polarisationsrichtung der Empfangsantennen umfaßt mit Ausnahme der Bereiche, wenn sie existieren, im Lot der Schnittstelle der ersten und zweiten Elementarantenne entlang der Polarisationsrichtung der Empfangsantennen.

27. Verfahren nach einem der Ansprüche 22 bis 26, **dadurch gekennzeichnet, daß** die Sendeantennen bezüglich der Räumlichkeit (6) derart angeordnet sind, daß die Lotbereiche in dem Raum (8), in dem Anzeigeeinheiten installiert werden können, voneinander getrennt sind.

28. Verfahren nach einem der Ansprüche 22 bis 27, **dadurch gekennzeichnet, daß** die Sendeantennen (a1, a2, ..., an) unter Berücksichtigung der Sendeleistung der Sendemittel (1) derart angeordnet sind, daß im Raum (8), der die gesamte Nutzfläche des Bodens (5) der Räumlichkeit (6) abdeckt und sich höher oder gleich hoch wie die Fächer (7) erstreckt, jeder Punkt von den Wirkungsbereichen (ZP1, ZP2, ZP3, ZP4) mindestens zweier verschiedener Elementarantennen (b1, b2, b3, b4) abgedeckt wird, von denen die eine zu einer ersten Sendeantenne gehört, während die andere zu einer von der ersten

Sendeantenne verschiedenen zweiten Sendeantenne gehört.

29. Verfahren nach einem der Ansprüche 22 bis 25, **dadurch gekennzeichnet, daß** alle Sendeantennen (a1, a2, ..., an) im wesentlichen dieselbe allgemeine, insbesondere polygonale, Form aufweisen.

30. Verfahren nach einem der Ansprüche 22 bis 26, **dadurch gekennzeichnet, daß** sich mindestens eine Gruppe von Elementarantennen (b1, b2, ..., bn) von verschiedenen Sendeantennen (a1, a2, ..., an) zumindest im wesentlichen horizontal und parallel zueinander erstreckt.

31. Verfahren nach einem der Ansprüche 22 bis 30, **dadurch gekennzeichnet, daß** sich jede Sendeantenne (a1, a2, ..., an) der Einrichtung vollständig in einer horizontalen Ebenen erstreckt.

32. Verfahren nach einem der Ansprüche 22 bis 31, **dadurch gekennzeichnet, daß** sich alle Sendeantennen (a1, a2, ..., an) der Einrichtung vollständig in einer selben horizontalen Ebene erstrecken.

33. Verfahren nach einem der Ansprüche 22 bis 32, **dadurch gekennzeichnet, daß** die verschiedenen Sendeantennen (a1, a2, ..., an) konzentrisch angeordnet werden.

34. Verfahren nach einem der Ansprüche 22 bis 32, **dadurch gekennzeichnet, daß** die verschiedenen Sendeantennen (a1, a2, ..., an) zueinander seitlich verschoben angeordnet sind.

35. Verfahren nach einem der Ansprüche 22 bis 34, **dadurch gekennzeichnet, daß** die Einrichtung zwei Sendeantennen (a1, a2), die in einer selben horizontalen Ebene angeordnet sind, von ähnlicher Form umfaßt, die ausgebildet sind, um die gesamte Oberfläche der Räumlichkeit (6) abzudecken, wobei der Abstand d, der die Elementarantennen der zwei Antennen (a1, a2) trennt, an allen Punkten kleiner als $\sqrt{(r^2 - h^2)}$ ist, wobei r der Wirkungsradius der Antennen (a1, a2) ist und h die Höhe ist, die die Elementarantennen der Antennen (a1, a2) von der am weitesten entfernten horizontalen Ebene, die eine Anzeigeeinheit 2 enthalten kann, trennt.

36. Verfahren nach einem der Ansprüche 22 bis 35, **dadurch gekennzeichnet, daß** die Mittel (11, 12) zur automatischen Schaltung ausgebildet sind, um sukzessive jeweils Signalfolgen auf die verschiedenen Sendeantennen (a1, a2, ..., an) gemäß einer Permutation anzuwenden.

37. Verfahren nach einem der Ansprüche 22 bis 36, **dadurch gekennzeichnet, daß** die Anzeigeeinheit (2) frei von Sendemitteln sind, wobei die Übertragung der Signale in einer Richtung von den Sendeantennen (a1, a2, ..., an) zu den Anzeigeeinheiten (2) stattfindet.

38. Verfahren nach einem der Ansprüche 22 bis 37, **dadurch gekennzeichnet, daß** die Einrichtung einen Steuercomputer (9) aufweist, der mit den Sendemitteln (1) verbunden ist und programmiert ist, um ihnen Serien von numerischen Daten zum Übertragen an die Anzeigeeinheiten (2) zu liefern und um jede Serie von Daten sukzessive entsprechend der Anzahl der Sendeantennen (a1, a2, ..., an) zu wiederholen.

39. Verfahren zum Einrichten nach Anspruch 38, **dadurch gekennzeichnet, daß** der Mikrocomputer (9) der Einrichtung programmiert ist, um das Schalten der Sendeantennen (a1, a2, ..., an) zu steuern.

40. Verfahren nach einem der Ansprüche 22 bis 38, **dadurch gekennzeichnet, daß** die Mittel (11, 12) zur automatischen Schaltung der Einrichtung einen Mikroprozessorschaltkreis (µP2) aufweisen, der ausgebildet und programmiert ist, um das Schalten der Sendeantennen (a1, a2, ..., an) zu steuern, wenn das Signal während einer vorbestimmten Dauer null ist.

41. Verfahren nach einem der Ansprüche 22 bis 40, **dadurch gekennzeichnet, daß** die Mittel (11, 12) zur automatischen Schaltung der Einrichtung einen Demultiplexer (12) umfassen, der zwischen einem Ausgang (A5) einer Verstärkerschaltung (11) zum Liefern der Signalfolgen und den verschiedenen Antennen (a1, a2, ..., an) geschaltet ist und ausgebildet ist, um diesen Ausgang (A5) mit einer einzigen Sendeantenne (a1, a2, ..., an) zu verbinden und um die verschiedenen Sendeantennen (a1, a2, ..., an) sukzessive unter der Steuerung eines Mikroprozessorschaltkreises (µP2), der mit dem Demultiplexer (12) verbunden ist, um ihm ein Steuersignal zu liefern, auf diesen Ausgang (A5) zu schalten.

42. Verfahren nach einem der Ansprüche 22 bis 41, **dadurch gekennzeichnet, daß** die Mittel (11, 12) zur automatischen Schaltung der Einrichtung Mittel (29) zum Anpassen der Impedanz für jede Sendeantenne (a1, a2, ..., an) aufweisen, die Mittel (µP2, 42, 43) zur automatischen Selektion umfassen, die ausgebildet sind, um bei Verbindung jeder Sendeantenne (a1, a2, ..., an) mit dem Ausgang einer Verstärkerschaltung 11 zum Liefern der Signalfolgen eine Impedanz (C1, C2, ..., Cn) mit geeignetem Wert festzulegen, der an die verbundene Sendeantenne angepaßt ist.

**Claims**

1. Room, such as a retail shop, containing an installation for electronic data display along gondolas (7) for receiving products, the said installation comprising:

   - means (1) of transmitting, using a current loop transmitting antenna, trains of sinusoidal signals, in the form of electromagnetic waves modulated at low or medium frequency according to the data to be transmitted to display modules (2),
   - electronic data display modules (2) each comprising a receiver with a receiving antenna polarized in one direction of polarization (3) and designed to pick up principally the magnetic component of the transmitted waves, **characterized in that** the transmission means (1) of the installation comprise, in combination :

     - a plurality of current loop transmitting antennas (a1, a2, ..., an) forming at least wires (b1, b2, ..., bn) extending horizontally, and disposed with respect to the room (6) in such a way that, in at least a portion of the space (8) in which display modules (2) can be installed, any zone, referred to as a plumb zone (ZA1, ZA2, ZA3, ZA4), which is comprised in a range zone of a wire, referred to as a first wire, of a first transmitting antenna, and which is situated at least substantially plumb with the first wire in the direction of polarization of the receiving antennas of the said display modules (2), is covered by a range zone (ZP1, ZP2, ZP3, ZP4) of at least a second wire belonging to a second transmitting antenna separate from the first transmitting antenna,
     - automatic switching means (11, 12) designed to apply to the different transmitting antennas, one after the other, each of the trains of signals which is therefore transmitted and repeated successively by the different transmitting antennas, such that any display module (2) in the zone plumb with the first wire receives the transmitted waves and that the room (6) has no screened zone.

2. Room according to Claim 1, **characterized in that** the transmitting antennas (a1, a2, -, an) of the installation are disposed with respect to the room (6) in such a way that for at least a portion of the space (8) in which the display modules are able to be installed, any zone (ZA1, ZA2, ZA3, ZA4) plumb with a first wire of a first transmitting antenna is covered by a range zone (ZP1, ZP2, ZP3, ZP4) of at least a second wire of a second separate transmitting antenna.

3. Room according to one of Claims 1 and 2, **characterized in that** the transmitting antennas (a1, a2, ..., an) of the installation are disposed with respect to the room (6) in such a way that for the whole of the space (8) in which display modules can be installed, any zone (ZA1, ZA2, ZA3, ZA4) plumb with a first wire of a first transmitting antenna is covered by a range zone (ZP1, ZP2, ZP3, ZP4) of at least a second wire of a second separate transmitting antenna.

4. Room according to one of Claims 1 to 3, **characterized in that** for each of the said horizontally extending wires, at least a portion of the zone (ZA1, ZA2, ZA3, ZA4) plumb wi th a f irst wire of a first transmitting antenna is not intersected by a zone plumb with a second wire of a second transmitting antenna separate from the first transmitting antenna.

5. Room according to Claim 4, **characterized in that** for each of the wires the said portion of the plumb zone (ZA1, ZA2, ZA3, ZA4) comprises the whole of the zone plumb with the first wire in the direction of polarization of the receiving antennas with the exception, if any of them exist, of zones plumb with the intersection of the first and second wires, in the direction of polarization of the receiving antennas.

6. Room according to one of Claims 1 to 5, **characterized in that** the transmitting antennas of the installation are disposed with respect to the room (6) in such a way that the plumb zones in the space (8), in which display modules can be installed, are not joined.

7. Room according to one of Claims 1 to 6, **characterized in that** the transmitting antennas (a1, a2, ..., an) of the installation are disposed, taking account of the transmitting power of the transmitting means (1), in such a way that in the space (8) covering the entire useful surface of the floor (5) of the room (6) and extending over a height greater than or equal to that of the gondolas (7), any point is covered by the range zones (ZP1, ZP2, ZP3, ZP4) of at least two separate wires (b1, b2, b3, b4), one of which is part of a first transmitting antenna, whilst the other one is part of a second transmitting antenna separate from the first transmitting antenna.

8. Room according to one of Claims 1 to 4, **characterized in that** all of the transmitting antennas (a1, a2, ..., an) of the installation have substantially the same general shape, polygonal in particular.

9. Room according to one of Claims 1 to 5, **characterized in that** the installation comprises at least one group of wires (b1, b2, ..., bn) of the different transmitting antennas (a1, a2, ..., an) which extend at least substantially horizontally and parallel with one another.

10. Room according to one of Claims 1 to 9, **characterized in that** each transmitting antenna (a1, a2, ..., an) of the installation extends globally in a horizontal plane.

11. Room according to one of Claims 1 to 10, **characterized in that** all of the transmitting antennas (a1, a2, ..., an) of the installation extend globally in a same horizontal plane.

12. Room according to one of Claims 1 to 11, **characterized in that** the different transmitting antennas (a1, a2, ..., an) of the installation are disposed in a concentric manner.

13. Room according to one of Claims 1 to 11, **characterized in that** the different transmitting antennas (a1, a2, ..., an) of the installation are disposed such that they are offset laterally with respect to each other.

14. Room according to one of Claims 1 to 13, **characterized in that** the installation comprises two transmitting antennas (a1, a2) placed in a same horizontal plane, having similar shapes designed to cover the whole of the area of the room (6), the distance d separating the wires of the two antennas (a1, a2) being at all points less than $\sqrt{(r^2 - h^2)}$, where R is the range radius of the antennas (a1, a2) and h is the height separating the wires of the antennas (a1, a2) from the most distant horizontal plane able to contain a display module (2).

15. Room according to one of Claims 1 to 14, **characterized in that** the automatic switching means (11, 12) of the installation are designed to apply successively each of the trains of signals to the different transmitting antennas (a1, a2, -, an) according to a permutation.

16. Room according to one of Claims 1 to 15, **characterized in that** the display modules (2) of the installation have no transmitting means, the transmission of signals being unidirectional from the transmitting antennas (a1, a2, ..., an) to the display modules (2).

17. Room according to one of Claims 1 to 16. **characterized in that** the installation comprises a control computer (9) connected to the transmission means (1) and programmed to feed them with series of digital data to be transmitted to the display modules (2), and for repeating each series of data successively according to the number of transmitting antennas (a1, a2, -, an).

18. Installation room according to Claim 17, **characterized in that** the microcomputer (9) of the installation is programmed to control the switching of the transmitting antennas (a1, a2, ..., an).

19. Room according to one of Claims 1 to 17, **characterized in that** the automatic switching means (11, 12) of the installation comprise a microprocessor circuit (µP2) designed and programmed to control the switching of the transmitting antennas (a1, a2, ..., an) when the signal is zero over a predetermined duration.

20. Room according to one of Claims 1 to 19, **characterized in that** the automatic switching means (11, 12) of the installation comprise a demultiplexer (12) interposed between an output (A5) of an amplifier circuit (11) for the supply of signal trains and the different antennas (a1, a2, ..., an), and designed to connect this output (A5) to one and only one transmitting antenna (a1, a2, ..., an), and to switch the different transmitting antennas (a1, a2, ..., an) successively onto this output (A5) under the control of a microprocessor circuit (µP2) connected to the demultiplexer (12) in order to provide it with a control signal.

21. Room according to one of Claims 1 to 20, **characterized in that** the automatic switching means (11, 12) of the installation comprise impedance matching means (29) for each transmitting antenna (a1, a2, ..., an), comprising automatic selection means (µP2, 42, 43) designed to associate an impedance (C1, C2, ..., Cm) of appropriate value matched to the connected transmitting antenna (a1, a2, ..., an) when each transmitting antenna (a1, a2, ..., an) is connected to the output of a signal train feed amplifier circuit (11).

22. Method of installing an installation for electronic data display along gondolas (7) for receiving products in a room (6) such as a retail shop, the said method comprising the following steps:

- the putting-in place of transmission means (1), using a current loop transmitting antenna, trains of sinusoidal signals, in the form of electromagnetic waves modulated at low or medium frequency according to the data to be transmitted to display modules (2),
- the putting-in place of electronic data display modules (2) each comprising a receiver with a receiving antenna polarized in one direction of polarization (3) and designed to pick up principally the magnetic component of the transmitted waves, **characterized in that** the transmission means (1) of the installation comprise, in combination, a plurality of current loop transmitting antennas (a1, a2, ... an) and communication means:

- the putting-in place of transmitting antennas forming at least wires (b1, b2, ..., bn) extending horizontally, and disposed with respect to the room (6) in such a way that, in at least a portion of the space (8) in which display modules (2) can be installed, any zone, referred to as a plumb zone (ZA1, ZA2, ZA3, ZA4), which is comprised in a range zone of a wire, referred to as a first wire, of a first transmitting antenna, and which is situated at least substantially plumb with the first wire in the direction of polarization of the receiving antennas of the said display modules (2), is covered by a range zone (ZP1, ZP2, ZP3, ZP4) of at least a second wire belonging to a second transmitting antenna separate from the first transmitting antenna,
- the putting-in place of automatic switching means (11, 12) designed to apply to the different transmitting antennas, one after the other, each of the trains of signals which is therefore transmitted and repeated successively by the different transmitting antennas, such that any display module (2) in the zone plumb with the first wire receives the transmitted waves and that the room (6) has no screened zone.

23. Method according to Claim 22, **characterized in that** the transmitting antennas (a1, a2, ..., an) are disposed with respect to the room (6) in such a way that for at least a portion of the space (8) in which the display modules are able to be installed, any plumb zone (ZA1, ZA2, ZA3, ZA4) of a first wire of a first transmitting antenna is covered by a range zone (ZP1, ZP2, ZP3, ZP4) of at least a second wire of a second separate transmitting antenna.

24. Method according to one of Claims 22 and 23, **characterized in that** the transmitting antennas (a1, a2, ..., an) are disposed with respect to the room (6) in such a way that for the whole of the space (8) in which display modules can be installed, any plumb zone (ZA1, ZA2, ZA3, ZA4) of a first wire of a first transmitting antenna is covered by a range zone (ZP1, ZP2, ZP3, ZP4) of at least a second wire of a second separate transmitting antenna.

25. Method according to one of Claims 22 to 24, **characterized in that**, for each of the said horizontally extending wires, at least a portion of the zone (ZA1, ZA2, ZA3, ZA4) plumb with a first wire of a first transmitting antenna is not intersected by a zone plumb with a second wire of a second transmitting antenna separate from the first transmitting antenna.

26. Method according to Claim 25, **characterized in that** for each of the wires the said portion of the plumb zone (ZA1, ZA2, ZA3, ZA4) comprises the whole of the zone plumb with the first wire in the direction of polarization of the receiving antennas with the exception, if any of than exist, of zones plumb with the intersection of the first and second wires, in the direction of polarization of the receiving antennas.

27. Method according to one of Claims 22 to 26, **characterized in that** the transmitting antermas are disposed with respect to the room (6) in such a way that the plumb zones in the space (8), in which display modules can be installed, are not joined.

28. Method according to one of Claims 22 to 27, **characterized in that** the transmitting antennas (a1, a2, ..., an) are disposed, taking account of the transmitting power of the transmitting means (1). in such a way that in the space (B) covering the entire useful surface of the floor (5) of the room (6) and extending over a height greater than or equal to that of the gondolas (7), any point is covered by the range zones (ZP1, ZP2, ZP3, ZP4) of at least two separate wires (b1, b2, b3, b4), one of which is part of a first transmitting antenna, whilst the other one is part of a second transmitting antenna separate from the first transmitting antenna.

29. Method according to one of Claims 22 to 25, **characterized in that** all of the transmitting antennas (a1, a2, ..., an) have substantially the same general shape, polygonal in particular.

30. Method according to one of Claims 22 to 26, **characterized in that** at least one group of wires (b1, b2, ..., bn) of the different transmitting antennas (a1, a2, ..., an) extend at least substantially horizontally and parallel with one another.

31. Method according to one of Claims 22 to 30, **characterized in that** each transmitting antenna (a1, a2, ..., an) of the installation extends globally in a horizontal plane.

32. Method according to one of Claims 22 to 31, **characterized in that** all of the transmitting antennas (a1, a2, ..., an) of the installation extend globally in a same horizontal plane.

33. Method according to one of Claims 22 to 32, **characterized in that** the different transmitting antennas (a1, a2, ..., an) are disposed in a concentric manner.

34. Method according to one of Claims 22 to 32, **characterized in that** the different transmitting antennas (a1, a2, ..., an) are disposed such that they are offset laterally with respect to each other.

35. Method according to one of Claims 22 to 34, **characterized in that** the installation comprises two transmitting antennas (a1, a2) placed in a same horizontal plane, having similar shapes designed to cover the whole of the area of the room (6), the distance d separating the wires of the two antennas (a1, a2) being at all points less than $\sqrt{(r^2 - h^2)}$, where R is the range radius of the antennas (a1, a2) and h is the height separating the wires of the antennas (a1, a2) from the most distant horizontal plane able to contain a display module (2).

36. Method according to one of Claims 22 to 35, **characterized in that** the automatic switching means (11, 12) are designed to apply successively each of the trains of signals to the different transmitting antennas (a1, a2, -, an) according to a permutation.

37. Method according to one of Claims 22 to 36, **characterized in that** the display modules (2) have no transmitting means, the transmission of signals being unidirectional from the transmitting antennas (a1, a2, ..., an) to the display modules (2).

38. Method according to one of Claims 22 to 37, **characterized in that** the installation comprises a control computer (9) connected to the transmission means (1) and programmed to feed them with series of digital data to be transmitted to the display modules (2), and for repeating each series of data successively according to the number of transmitting antennas (a1, a2, ..., an).

39. Installation method according to Claim 38, **characterized in that** the microcomputer (9) of the installation is programmed to control the switching of the transmitting antennas (a1, a2, -, an).

40. Method according to one of Claims 22 to 38, **characterized in that** the automatic switching means (11, 12) of the installation comprise a microprocessor circuit (µP2) designed and programmed to control the switching of the transmitting antennas (a1, a2, ..., an) when the signal is zero over a predetermined duration.

41. Method according to one of Claims 22 to 40, **characterized in that** the automatic switching means (11, 12) of the installation comprise a demultiplexer (12) interposed between an output (A5) of an amplifier circuit (11) for the supply of signal trains and the different antennas (a1, a2, -, an), and designed to connect this output (A5) to one and only one transmitting antenna (a1, a2, ..., an), and to switch the different transmitting antennas (a1, a2, ..., an) successively onto this output (A5) under the control of a microprocessor circuit (μP2) connected to the demultiplexer (12) in order to provide it with a control signal.

42. Method according to one of Claims 22 to 41, **characterized in that** the automatic switching means (11, 12) of the installation comprise impedance matching means (29) for each transmitting antenna (a1, a2, ..., an), comprising automatic selection means (μP2, 42 , 43) designed to associate an impedance (C1, C2 , ..., Cm) of appropriate value matched to the connected transmitting antenna (a1, a2, ..., an) when each transmitting antenna (a1, a2, ..., an) is connected to the output of a signal train feed amplifier circuit (11) .

FIG.1

EP 0 972 358 B1

FIG. 3

FIG. 2

FIG.4

EP 0 972 358 B1

FIG.5

FIG. 6

FIG.7

| HE | AD | SYNC | DATA | | CS |
|----|----|------|------|--|----|

FIG. 8

FIG. 9

FIG.10